(19) Europäisches Patentamt
European Patent Office
Office européen des brevets

(11) **EP 1 724 592 B1**

(12) **FASCICULE DE BREVET EUROPEEN**

(45) Date de publication et mention
de la délivrance du brevet:
**04.04.2018 Bulletin 2018/14**

(21) Numéro de dépôt: **06010128.4**

(22) Date de dépôt: **17.05.2006**

(51) Int Cl.:
*G01C 21/16* (2006.01)     *G01S 17/93* (2006.01)
*G01S 17/89* (2006.01)     *G01S 17/02* (2006.01)
*G01S 15/02* (2006.01)     *G01S 15/58* (2006.01)
*G01S 13/89* (2006.01)     *G01S 13/88* (2006.01)
*G01S 13/86* (2006.01)     *G01S 13/58* (2006.01)

(54) **Système d'estimation de la vitesse d'un aéronef et son application à la détection d'obstacles**

System zur Schätzung der Geschwindigkeit eines Luftschiffs und Anwendung dieses Systems auf die Erfassung von Hindernissen

System for estimating the speed of an aircraft and its application to the detection of obstacles

(84) Etats contractants désignés:
**DE GB IT**

(30) Priorité: **19.05.2005 FR 0505047**

(43) Date de publication de la demande:
**22.11.2006 Bulletin 2006/47**

(73) Titulaire: **Airbus Helicopters**
**13725 Marignane Cedex (FR)**

(72) Inventeurs:
• **Filias, Francois-Xavier**
**13410 Lambesc (FR)**

• **Petillon, Jean-Paul**
**13140 Miramas (FR)**
• **Pire, Richard**
**13800 Istres (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
US-A- 3 702 477     US-A- 4 671 650
US-A- 5 166 688     US-A- 6 157 891
US-A1- 2004 267 444

## Description

La présente invention est relative à un procédé et à un dispositif d'estimation de la vitesse d'un aéronef, ainsi qu'à leur application dans un système de détection d'obstacles embarqué à bord de l'aéronef.

Le domaine technique de l'invention est celui de la fabrication et de l'utilisation de systèmes de détection d'obstacles (OWS ou « Obstacle Warning System ») embarqués à bord de véhicules.

La présente invention est plus particulièrement relative à un système de détection d'obstacles autonome embarqué à bord d'un aéronef à voilure tournante, qui incorpore un capteur d'observation du sol survolé par l'aéronef tel qu'un télémètre à balayage.

Le document US2004267444 décrit un système d'aide à la navigation embarqué dans un aéronef, comprenant une centrale de navigation inertielle qui fournit une position horizontale et une altitude en repère terrestre. Ce système comprend une radiosonde qui fournit une mesure de la hauteur de l'aéronef par rapport au sol. Une base de données de terrain fournit une altitude du sol correspondant à la position horizontale délivrée par la centrale inertielle, et des moyens pour corriger l'altitude fournie par la centrale inertielle utilisent les données issues de la radiosonde et de la base de données de terrain. Un système à plusieurs radiosondes n'est prévu que pour réduire les risques de défauts dus à des pannes matérielles de la radiosonde.

Le document US5166688 décrit l'extraction d'erreurs du mouvement d'un porteur (avion, missile ou hélicoptère) dans un système de radar d'imagerie cohérent embarqué, à partir de données brutes. Pour la représentation de zones présentant des différences entre un signal reçu et un signal émis, des spectres azimutaux se succèdent en continu pendant une durée déterminée. Ces spectres azimutaux se composent du produit d'un diagramme d'antenne dans la direction azimutale et d'un rapport de rétrodiffusion donné par des points de cibles. Un décalage de fréquence est obtenu par détermination de la position d'un maximum de corrélation entre deux spectres qui se suivent directement. Un filtrage de la fréquence est effectué pour obtenir une séparation entre une vitesse à normaliser suivant une direction d'accélération et suivant une direction de visée d'antenne. Pour finir, l'accélération obtenue suivant la direction de visée de l'antenne est soumise à une double intégration afin d'obtenir la vitesse dérivée suivant la direction de visée de l'antenne.

Le document US3702477 décrit un système de navigation système de navigation comportant un ensemble de capteurs inertiels qui utilise des données de décalage de fréquence Doppler d'un satellite en orbite terrestre pour corriger des erreurs dans les capteurs inertiels.

Le brevet US5128874 décrit un système de détection d'obstacles combinant un capteur actif (radar) et des capteurs passifs (caméra) ; les images délivrées par les capteurs passifs sont analysés et des points d'intérêt (points saillants du relief) en sont extraits ; pour les points d'intérêt de deux images successives, l'effet des rotations de l'aéronef (cap, roulis, tangage) dans l'intervalle de temps séparant la prise de ces images est compensé à l'aide de signaux délivrés par une unité de navigation inertielle ; l'appariement des points d'intérêt communs à ces deux images ainsi que le calcul d'un foyer d'expansion correspondant à la direction instantanée de déplacement de l'aéronef sont ensuite réalisés ; la distance séparant l'aéronef de l'objet correspondant à une paire de points d'intérêt appariés est calculée en fonction notamment de la vitesse de translation de l'aéronef délivrée par l'unité de navigation inertielle ; le système décrit dans ce brevet est complexe ; en outre, la précision de ce système est soumise à la dérive de l'estimation de vitesse faite par l'unité inertielle à partir d'une mesure d'accélération ; par ailleurs, le capteur actif (radar millimétrique ou laser) est utilisé pour détecter, en avant de l'hélicoptère, la présence de petits obstacles ; à cet effet, ce capteur effectue un balayage circulaire pour maintenir la durée d'acquisition à une valeur suffisamment faible.

En effet, la durée de construction d'une image LIDAR ou RADAR par balayage croît proportionnellement avec la résolution de l'image (nombre de pixels) et avec la portée du capteur. La constitution d'une image de 100000 points avec un laser ayant une portée de 1500 mètres demande 1 seconde environ.

Pendant une telle durée, le véhicule portant le système de détection d'obstacles a parcouru une distance non négligeable (typiquement de l'ordre de 70 mètres pour un hélicoptère), ce qui a pour effet de distordre l'image obtenue.

Pour compenser cette distorsion, une technique connue consiste à utiliser des informations issues d'un système de positionnement tel qu'un GPS installé à bord du véhicule porteur ; ces informations sont éventuellement hybridées avec des données de positionnement délivrées par une centrale inertielle, pour "réactualiser" individuellement chacune des mesures et reconstruire une image conforme à la réalité. En utilisant une hybridation GPS/centrale inertielle, on atteint une précision d'estimation de la vitesse du véhicule porteur qui est de l'ordre d'un centimètre par seconde, ce qui permet d'extraire des détails très fins de l'image ; une détermination suffisamment précise de la vitesse du porteur par rapport au sol est en outre nécessaire pour construire un ensemble de symboles d'aide à l'évitement des obstacles.

Un inconvénient de cette technique est que la disponibilité et l'intégrité de la fonction de détection d'obstacles s'appuient sur la "mise en série" (au sens des modes de panne) i) du capteur d'observation du sol ; ii) du système de traitement d'images pour la détection d'obstacles ; iii) du système de positionnement par satellite ; et iv) de la centrale inertielle.

Cette solution manque de sûreté de fonctionnement pour une application civile. Pour une application civile "tout temps", le rôle assigné à l'OWS est au contraire de sécuriser le GPS, si possible sans faire appel à une centrale inertielle coûteuse.

Ainsi, il est connu d'utiliser une centrale inertielle INS (Inertial Navigation System), un récepteur GPS, ou un système hybride INS/GPS pour mesurer la vitesse du véhicule porteur nécessaire au fonctionnement du détecteur d'obstacles embarqué sur ce véhicule.

Il est également connu d'utiliser un lidar balayant les éventuels obstacles situés dans un secteur frontal de l'hélicoptère à l'aide d'un faisceau laser, et transmettant en temps réel ses mesures instantanées (angles d'azimut et d'élévation du faisceau, et mesure de distance de l'éventuel écho) à un calculateur. Celui-ci convertit les mesures dans un repère fixe grâce aux mesures instantanées des angles d'Euler d'une part (cap, attitudes) issues d'un appareil de mesure inertiel (IRS ou AHRS) et, d'autre part, de la vitesse du porteur (issue d'une centrale inertielle et le cas échéant d'un GPS), et stocke ces mesures dans une mémoire sous forme d'une matrice de points (ou « plots »).

A partir de ces mesures converties, le calculateur génère un ensemble de symboles consistant souvent en une vue, depuis le cockpit, de la scène balayée par le capteur à balayage, à une cadence suffisamment élevée pour être « fluide » : bien que la scène observée soit généralement statique, la vue depuis le cockpit est dynamique du fait des mouvements du porteur.

Certains de ces systèmes, qui s'appuient sur une excellente précision de la mesure de vitesse, permettent d'excellentes performances du détecteur d'obstacles ; il est alors possible, par traitement d'image, d'extraire des détails fins tels que les pylônes et/ou les câbles électriques à haute tension.

L'analyse de tels systèmes montre cependant qu'ils présentent des inconvénients, à savoir :

- une faible disponibilité en cas d'utilisation du seul GPS : en effet, pour fonctionner normalement, un GPS a besoin d'au moins 4 satellites en vue, ce qui n'est pas forcément le cas - du fait des masquages - dans un vol effectué par un hélicoptère, près du terrain ;

- des performances médiocres dans le cas de l'utilisation seule d'une (de) centrale(s) inertielle(s) : une précision de vitesse de l'ordre d'un mètre par seconde ne permet pas une analyse fine de l'image construite à partir des mesures du capteur à balayage; et

- un coût élevé dans le cas de la mise en oeuvre d'une solution INS (seule ou hybridée avec un GPS).

Les systèmes connus sont inadaptés aux applications où on cherche à sécuriser la fonction de localisation basée sur le GPS, ce qui - pour éviter les modes communs de panne - proscrit l'utilisation du GPS dans la fonction OWS.

Un objectif de l'invention est de proposer un système embarqué simple d'estimation de la vitesse d'un aéronef par rapport au sol survolé par l'aéronef, ainsi qu'un système de détection d'obstacles embarqué à bord de l'aéronef - en particulier un aéronef à voilure tournante - qui incorpore un tel système d'estimation de vitesse ; un objectif de l'invention est de proposer de tels systèmes, embarqués ou pouvant être embarqués à bord d'un aéronef, qui soient améliorés et/ou qui remédient, en partie au moins, aux inconvénients des systèmes connus d'estimation de vitesse et de détection d'obstacles.

A cet effet, selon un aspect de l'invention, la revendication 1 propose un procédé. Ce procédé permet la détermination d'au moins deux composantes (généralement horizontales) d'une vitesse estimée d'un aéronef par rapport au sol survolé par l'aéronef, par hybridation ou combinaison de mesures inertielles des mouvements de l'aéronef avec des mesures successives de la distance séparant l'aéronef d'une région du sol.

De préférence, les mesures inertielles comportent les trois composantes de l'accélération linéaire de l'aéronef, et les trois composantes de sa vitesse angulaire.

Selon des modes préférés de réalisation de l'invention :

- on forme successivement au moins deux images d'une même région du sol, et on détermine au moins une donnée de vitesse ($\vec{v}_R$) brute ou observée en fonction de décalage(s) ($\vec{d}$) entre les images ; par « donnée de vitesse brute ou observée », on entend soit la vitesse brute ou observée elle-même, soit la différence entre cette vitesse (« brute » ou « observée ») et la vitesse hybride précédemment observée ; dans ce dernier cas, cette différence est également dénommée « écart de vitesse » ;

- cette donnée de vitesse brute ou observée est combinée, par filtrage complémentaire, à des mesures inertielles du mouvement de l'aéronef pour former la vitesse « estimée » ($\hat{\vec{v}}$), dite aussi vitesse hybride.

De préférence, on détermine une matrice de covariance a priori de l'erreur affectant la mesure (ou donnée) de vitesse brute ou observée, et le filtrage est réalisé par un filtre complémentaire à gains ($K$) variables et dépendants de ladite matrice de covariance, en particulier par un filtre de Kalman.

Les mesures de distance sont de préférence issues d'un lidar, d'un radar, SAR (*Syntbetic Aperture Radar*), ou d'un sonar, en particulier par balayage de la région du sol observée et/ou survolée par l'aéronef.

Les images peuvent être constituées par des séries de mesures ou données de distance séparant l'aéronef de points de la région du sol observée et correspondant à des mesures délivrées par un télémètre ; on peut alors déterminer une première vitesse brute ou observée en fonction de décalages entre ces images.

Les images peuvent également comporter des données d'intensité lumineuse de points de la région du sol observée qui sont délivrées par au moins une caméra embarquée à bord de l'aéronef ; on peut alors déterminer une autre (seconde) vitesse brute ou observée en fonction de décalages entre ces images.

De préférence, les moyens de détermination de la vitesse brute ou observée ($\vec{v}_R$) à partir des images mettent en oeuvre une méthode différentielle.

Alternativement, les moyens de détermination de la vitesse observée ($\vec{v}_R$) à partir des images peuvent mettre en oeuvre une méthode de corrélation, une méthode basée sur l'énergie, une méthode utilisant des modèles paramétrés, ou des méthodes mixtes de celles-ci.

On peut combiner en outre aux mesures inertielles, de distance et le cas échéant d'intensité lumineuse, des mesures de vitesse de l'aéronef dans (par rapport à) l'air, des mesures de cap et/ou de champ magnétique, et/ou des mesures d'altitude et/ou de pression barométrique.

En d'autres termes, et selon un autre aspect de l'invention, il est proposé un système de détermination d'une vitesse estimée ($\hat{\vec{v}}$) d'un aéronef comportant une unité de mesure inertielle délivrant des signaux ou données de mesure du mouvement de l'aéronef, qui comporte en outre des moyens de mesure de distances séparant l'aéronef de points d'une région du sol, et des moyens d'hybridation pour combiner les mesures inertielles et des mesures délivrées par les moyens de mesure de distances et délivrer la vitesse estimée ($\hat{\vec{v}}$) ou hybride.

De préférence, ce système comporte des moyens pour déterminer une vitesse ($\vec{v}_R$) observée ou brute en fonction de signaux ou données de distance délivré(e)s par les moyens de mesure de distances, et les moyens d'hybridation comportent des moyens de soustraction pour soustraire la vitesse hybride précédemment déterminée à la vitesse observée, en produisant un écart de vitesse ($\hat{\vec{v}} - \vec{v}_R$), et des moyens de filtrage pour filtrer cet écart de vitesse et les mesures inertielles.

De préférence, ces moyens de filtrage présentent un gain variable en fonction des covariances des erreurs entachant les mesures de distance d'une part, et les mesures inertielles d'autre part.

La vitesse observée peut être déterminée à partir d'une comparaison de deux séries successives de mesures de distance, et à partir de l'intervalle de temps ($\tau$) séparant ces deux séries d'observation d'une même région du sol.

Les moyens de mesure de distance peuvent comporter un télémètre tel qu'un radar, un lidar, un sonar ou un SAR, ou bien un télémètre instantané (dit "snapshot"), le télémètre délivrant une pluralité de mesures ou échos à trois dimensions de points du sol, ou tout système équivalent fournissant une information tridimensionnelle du sol ou des obstacles situés dans une portion de l'espace faisant face à l'aéronef.

Le système selon l'invention peut comporter en outre un capteur d'altitude barométrique, un magnétomètre et/ou un capteur de vitesse air, ainsi que des moyens d'hybridation pour combiner les mesures délivrées par ces capteurs avec les mesures inertielles et de distance.

Il peut comporter en outre au moins un capteur d'observation passif tel qu'une caméra infrarouge, et des moyens de détermination d'une seconde vitesse observée à partir des images délivrées par ce capteur et des mesures de distances, afin de pallier aux phases où l'on ne peut pas estimer de vitesse brute ou observée à partir des seules mesures de distance, comme par exemple pendant le survol d'un terrain plat.

Selon un autre aspect de l'invention, il est proposé un procédé de détection d'obstacles à bord d'un aéronef, en particulier à bord d'un aéronef à voilure tournante, comportant les opérations suivantes :

- l'extraction d'au moins une information de vitesse observée ($\vec{v}_R$) de l'aéronef à partir d'une séquence d'images ou d'échos d'une scène fixe délivré(e)s par un capteur d'observation installé à bord de l'aéronef, chaque image ou ensemble d'échos comportant des informations incluant des positions relatives (3D) d'une pluralité de points du relief survolé par l'aéronef ;

- l'hybridation de la vitesse observée avec celle délivrée par un senseur inertiel embarqué ; et

- la détection d'obstacles à partir des échos et de la vitesse obtenue par hybridation.

Selon un autre aspect, il est proposé un système de détection d'obstacles pour un aéronef à voilure tournante qui comporte un système selon l'invention d'estimation d'au moins deux composantes de la vitesse de déplacement de l'aéronef, et/ou qui est programmé pour appliquer un procédé selon l'invention.

L'invention permet d'améliorer la dynamique et la précision de la mesure de vitesse, de diminuer ou supprimer le bruit des mesures effectuées, et d'assurer la continuité de l'estimation de vitesse. L'invention permet de réaliser un système OWS indépendant d'un GPS.

Dans un mode préféré de réalisation, on utilise une séquence qui comporte deux ou trois images ou séries successives d'échos délivrés par un télémètre à balayage.

L'invention ne nécessite pas de monter le télémètre sur une plateforme gyxostabilisée ; le télémètre à balayage est de préférence solidaire - de façon fixe ou orientable en site et/ou en gisement - de l'hélicoptère.

D'autres caractéristiques et avantages de l'invention apparaissent dans la description suivante, qui se réfère aux dessins annexés et qui illustre, sans aucun caractère limitatif, des modes préférés de réalisation de l'invention.

Sauf indication contraire, des repères identiques désignent des éléments identiques ou similaires dans leurs structures et/ou fonctions.

La figure 1 est un schéma illustrant l'intégration d'un système d'estimation de la vitesse d'un aéronef selon l'invention dans un système embarqué de visualisation d'obstacles.

La figure 2 est un schéma illustrant la position d'un repère lié à un télémètre embarqué à bord d'un hélicoptère.

La figure 3 est un graphique illustrant en vue en coupe, deux profils d'une région du terrain observé par un télémètre.

Les figures 4 à 9 sont des graphes illustrant, en vue en perspective schématique, des étapes du traitement de nappes maillées construites à partir de plots de mesure délivrés par un télémètre, pour le calcul d'un décalage entre deux nappes correspondant à deux séries successives de mesures, et pour le calcul d'une vitesse « observée » - ou d'un écart de vitesse - à partir de ce décalage.

La figure 10 est un schéma illustrant un hélicoptère survolant un sol plat, dans deux positions successives d'observation du sol.

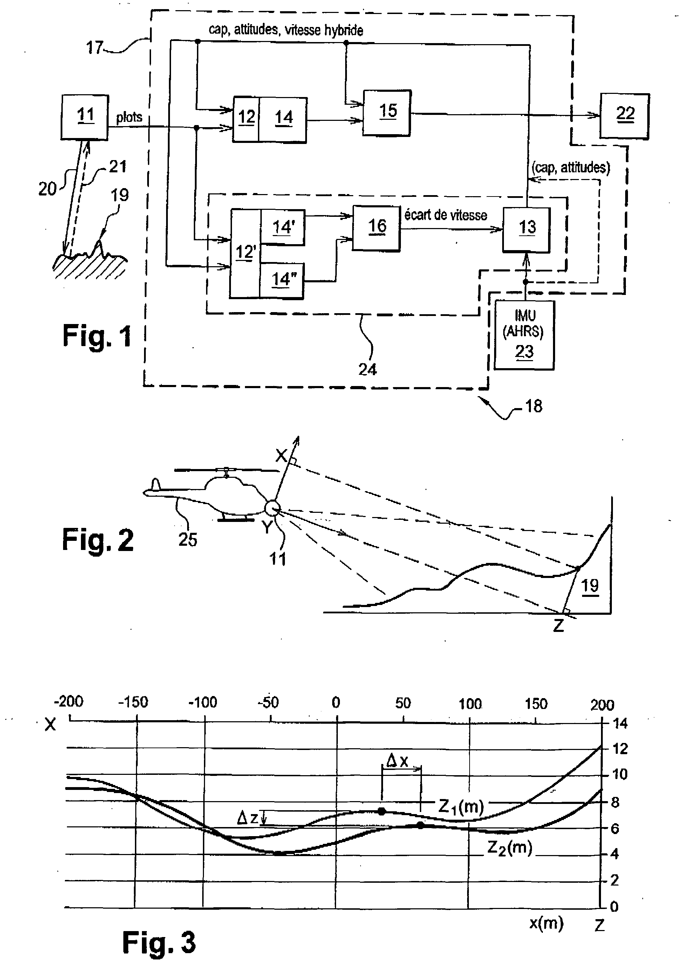

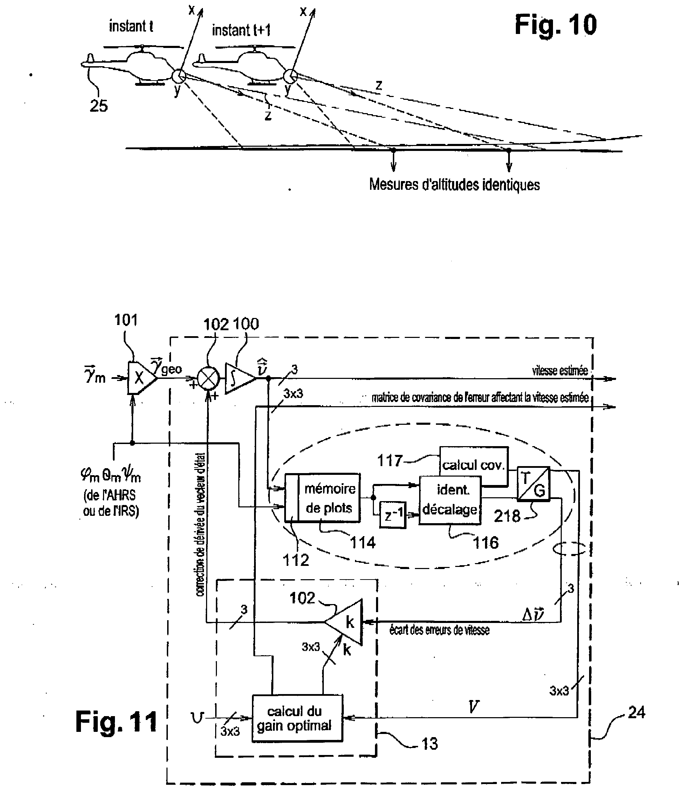

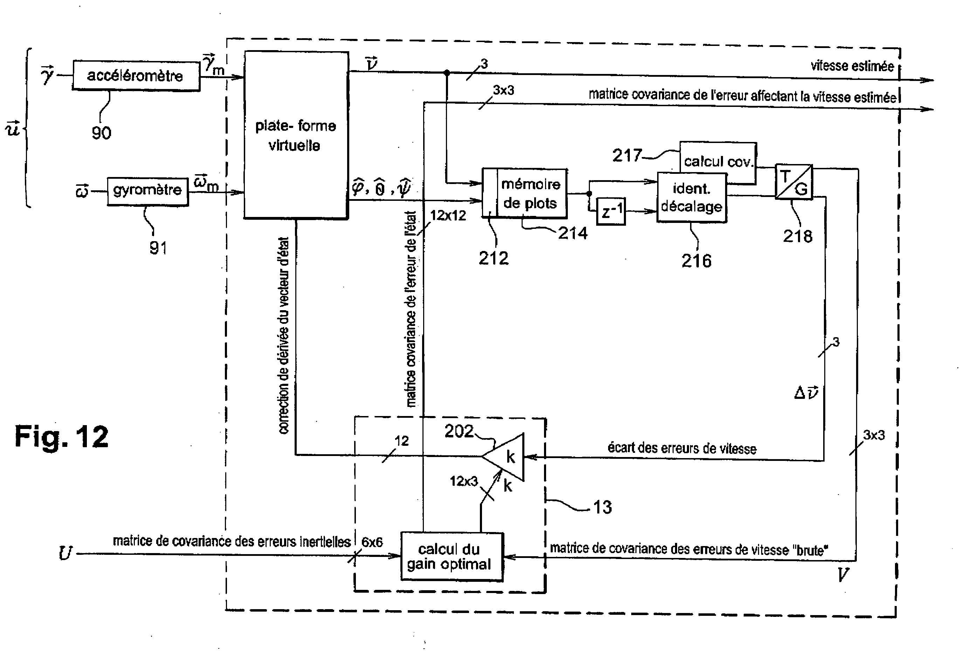

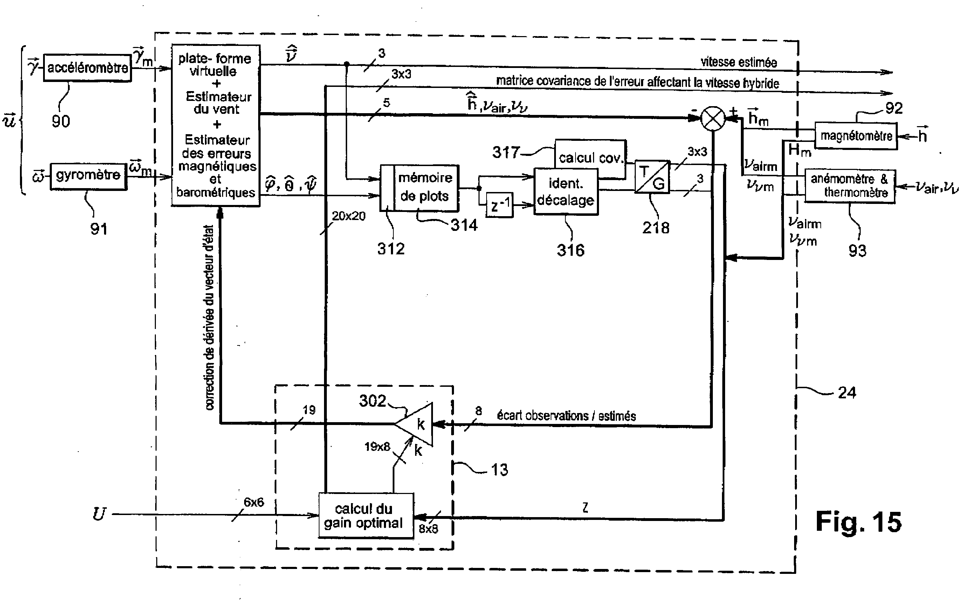

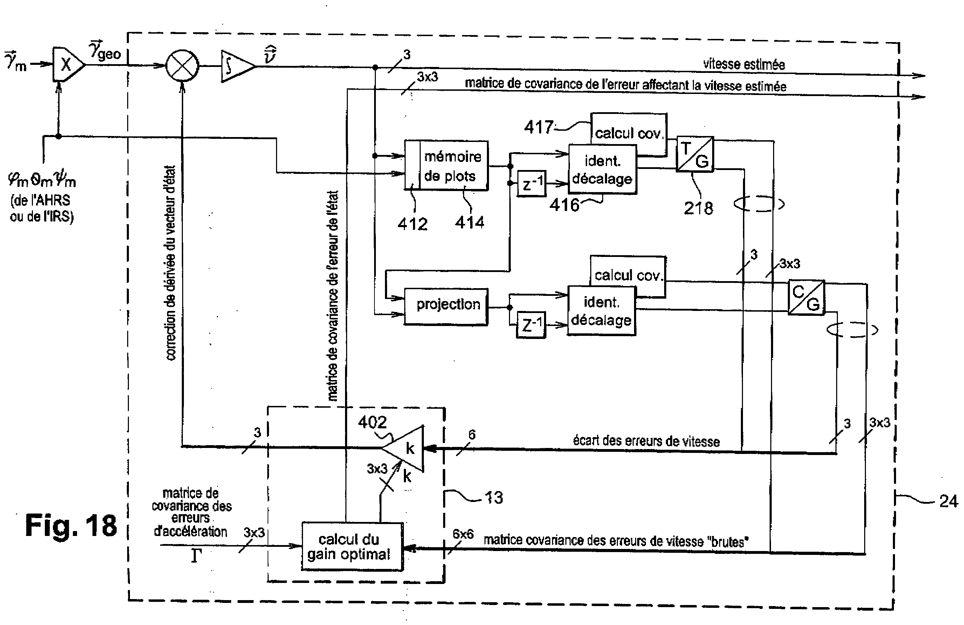

Les figures 11 à 18 sont des graphes illustrant l'organisation des principaux moyens de calcul (repère 24 figure 1) d'une vitesse hybride à partir de mesures inertielles d'une part, et à partir de mesures de distance au sol complétées selon le cas par des mesures ou observations complémentaires, d'autre part ; la figure 11 correspond à un premier mode de réalisation d'un système d'hybridation dont le vecteur d'état est de dimension trois ; les figures 12 à 14 correspondent à un second mode de réalisation d'un système d'hybridation dont le vecteur d'état est de dimension douze ; les figures 15 à 17 correspondent à un troisième mode de réalisation d'un système d'hybridation dont le vecteur d'état est de dimension dix neuf ; la figure 18 correspond à un quatrième mode de réalisation d'un système d'hybridation dont le vecteur d'état est de dimension trois.

La figure 19 est un schéma illustrant la transformation d'une image délivrée par une camera dans un repère lié à un télémètre embarqué à bord d'un hélicoptère.

Selon un mode préféré de réalisation de l'invention, on extrait une information de vitesse sol à partir des échos renvoyés par des points du sol et reçus par le capteur à balayage, par traitement des vues (séries d'échos) successives et analyse du déplacement des échos, d'une vue à la vue suivante. La mise en oeuvre de ce seul capteur ne permettrait au mieux que d'avoir une mesure de vitesse à chaque nouvelle image, soit à une fréquence de l'ordre de 1Hz, ce qui ne correspond pas aux besoins de mesure dynamique pour un aéronef ; conformément à l'invention, on utilise en outre un capteur inertiel (IMU « *Inertiel Measurement Unit* ») qui permet, par filtrage complémentaire, de produire une mesure de vitesse à haute cadence et d'entretenir une estimation de la vitesse de l'aéronef pendant les phases de vol où le télémètre à balayage (en abrégé TAB) ne produit pas d'écho (pour cause d'altitude trop élevée et/ou d'angles d'assiette excessifs).

L'IMU peut soit être dédiée au TAB et intégrée dans l'équipement lui-même, soit être celle des centrales d'attitude et de cap (AHRS « *Attitude & Heading Referential System* ») qui équipent les hélicoptères modernes. Dans ce dernier cas, le TAB est connecté à l'AHRS.

La figure 1 illustre schématiquement les principaux composants d'un système 18 selon l'invention et leurs connexions pour la mise en oeuvre du traitement de données d'observation conforme à l'invention.

Un lidar 11 balaye les éventuels obstacles fixes et/ou reliés à une région du sol 19, incluant le relief du terrain, qui sont situés dans un secteur frontal de l'hélicoptère, à l'aide d'un faisceau 20 laser, et transmet en temps réel ses mesures instantanées (angles d'azimut et d'élévation du faisceau, et mesure de distance de l'éventuel écho 21) à un calculateur 17 ; celui-ci convertit (bloc 12, 12') les mesures Lidar (données de site, gisement, et distance) vers un repère fixe, stocke les mesures converties dans une mémoire 14 de plots « long terme » et génère (bloc 15) un ensemble de symboles, de préférence selon le procédé décrit dans les brevets FR2712251 et US5555175; les symboles et/ou l'image formée à partir des plots de la mémoire 14 sont affichés sur un écran 22.

Le calculateur 17 détermine l'estimation de vitesse et éventuellement d'attitude dont il a besoin pour les conversions des mesures du Lidar et la génération des symboles, selon les étapes décrites ci-après ; en parallèle des traitements "conventionnels", on utilise les mesures (ou « plots ») issues du Lidar pour effectuer les traitements décrits ci-après.

Si on désigne par une image « de rang n » et image « de rang n+1 », deux images successives respectivement enregistrées à un moment donné dans les mémoires 14' et 14", à la fin du traitement de cette paire d'images, par permutation de mémoires, on remplace l'image de rang (n) par l'image de rang (n+1), et on enregistre l'image suivante dans la mémoire 14", à la place de l'image de rang (n+1).

Pour la conversion des mesures dans un repère fixe commun à 2 images successives respectivement stockées dans deux mémoires tampons 14' et 14", on choisit avantageusement comme repère fixe, la position (linéique et angulaire) qu'occupait le porteur (l'aéronef) au début de l'acquisition de l'image de rang n. Le vecteur vitesse sol hybride nécessaire à cette conversion est issu d'un filtre d'hybridation 13. Les angles d'Euler eux aussi nécessaires peuvent êtres issus soit du filtre d'hybridation 13 également, soit de l'AHRS 23 si le calculateur y est connecté.

Ainsi, on stocke deux images (ou séries d'échos) successives dans leur mémoire respective 14' et 14", puis on traite les deux images pour déceler un décalage entre elles. A cet effet, différentes réalisations de l'invention peuvent être envisagées, selon que le décalage recherché est une pure translation (3 degrés de liberté), ou une translation accompagnée d'une rotation (6 degrés de liberté).

Dans le schéma illustré figure 1, un identificateur 16 de décalage réalise un traitement permettant d'extraire une simple translation.

Cette translation $\vec{d}$ vaut $\tau\,\Delta\vec{v}$, où $\tau$ est l'intervalle de temps connu qui sépare l'acquisition des deux images successives traitées collectivement pour déceler leur décalage, et où le vecteur $\Delta\vec{v}$ est l'écart entre la vitesse estimée (ou vitesse hybride) et la vitesse observée à partir des mesures brutes; ce décalage de vitesse $\Delta\vec{v}$ est alors calculé en tant que $\dfrac{1}{\tau}\vec{d}$.

Le traitement des images successives permettant d'évaluer le décalage $\vec{d}$ peut prendre différentes formes dont certaines sont détaillées ci-après. Parmi les variantes de réalisation de l'invention, on peut traiter des paires ou triplets de parties d'images plutôt que des paires ou triplets d'images entières.

Différentes méthodes peuvent être utilisées afin d'évaluer le vecteur vitesse par des méthodes d'imagerie.

La solution préférée consiste à utiliser une méthode différentielle qui se base sur la conservation de la distribution des altitudes ; la translation recherchée doit être inférieure au détail le plus fin de la scène pour que l'approximation par développement limité au 1er ordre reste licite. Cette méthode est bien adaptée, puisque la cadence des images de télémétrie est de l'ordre de 1Hz, et l'erreur de vitesse envisagée de l'ordre du mètre par seconde, soit une amplitude de translation de l'ordre du mètre entre les images successives, ce qui est généralement plus faible que les aspérités du terrain.

D'autres méthodes peuvent être utilisées, en particulier :

- une méthode de corrélation, dans laquelle on se base sur des ensembles de points où les variations sont élevées. On appelle ces motifs des marqueurs. Le vecteur vitesse est alors obtenu en maximisant une mesure de similarité sur un marqueur ; ou

- une méthode basée sur l'énergie, qui utilise une famille de filtres spatio-temporels accordés sur certaines fréquences pour extraire de l'information sur le mouvement ; ou

- une méthode utilisant des modèles paramétrés s'appuyant sur un modèle paramétré du mouvement. Cette identification se fait par la meilleure adaptation des paramètres du modèle.

Selon une caractéristique préférée de l'invention on identifie des décalages dans une paire d'images successives, par une méthode différentielle, et on entretient le filtre d'hybridation 13 entre les mesures inertielles issues de l'IMU 23 et les erreurs de vitesse identifiées par le traitement des images successives.

Détermination d'un vecteur « vitesse observée » à partir de mesures télémétriques

Conformément à un aspect de l'invention, on identifie un biais de vitesse inertielle par traitement des données de distance au sol délivrées par un télémètre.

La surface du terrain et des obstacles balayée par le faisceau est une nappe surfacique $z(x,y)$ stationnaire, fonction de deux coordonnées $x$ et $y$.

Pour préserver la stationnarité, le repère $(x,y,z)$ doit être un repère fixe, i.e. lié au sol.

Le repère $(x,y,z)$ illustré figure 2 est celui du Lidar 11, à un instant $t_0$ donné. Toutes les mesures Lidar d'un même lot de traitement doivent être projetées dans ce même repère fixe.

Le repère choisi pour le Lidar est tel qu'il coïncide avec le repère hélicoptère (i.e. $x > 0$ vers l'avant, $y > 0$ vers la droite et $z > 0$ vers le bas) dans une position hypothétique où il "regarderait" vers le bas. Il est donc déduit du repère porteur par une simple rotation d'angle $\theta_t$ autour de l'axe "$y$" commun aux repères hélicoptère et Lidar.

On peut supposer que la mesure de vitesse angulaire est suffisamment précise pour négliger l'erreur angulaire accumulée pendant la durée de deux "prises de vue" successives ramenées dans ce repère initial. On néglige donc tout terme de rotation entre les deux vues.

Par contre, du fait du biais $\vec{\Delta v}$ affectant la mesure du vecteur vitesse utilisée pour ramener les mesures successives dans le repère initial, les deux vues apparaissent comme translatées (décalées) l'une de l'autre d'une distance $\vec{d} = \tau \vec{\Delta v}$ où $\tau$ est le décalage de temps - connu - entre les deux prises de vue (notées avec les indices 1 et 2) :

équation 1 :

$$z_2(x, y) = z_1(x + \Delta x, y + \Delta y) + \Delta z$$

où $[\Delta x \ \Delta y \ \Delta z]^T$ est le vecteur translation entre les deux vues.

Le graphique illustré figure 3 est une coupe selon le plan $[x,y]$, dans un cas particulier où $\Delta y$ est nul.

Si la composante dans le plan $[x,y]$ du décalage spatial est suffisamment faible, on obtient une approximation valable de $z(x+\Delta x, y+\Delta y)$ par développement limité au premier ordre :

équation 2 :

$$z(x + \Delta x, y + \Delta y) = z(x, y) + \frac{\partial z}{\partial x} \Delta x + \frac{\partial z}{\partial y} \Delta y = z(x, y) + \begin{bmatrix} \dfrac{\partial z}{\partial x} & \dfrac{\partial z}{\partial y} \end{bmatrix}_{(x,y)} \begin{bmatrix} \Delta x \\ \Delta y \end{bmatrix}$$

où : $\begin{bmatrix} \partial z / \partial x \\ \partial z / \partial \hat{\phantom{y}} \end{bmatrix}_{(x,y)}$ est le gradient d'altitude du terrain par rapport au plan $[x,y]$, et

$\begin{bmatrix} \Delta x \\ \Delta y \end{bmatrix}$ est la partie horizontale du décalage spatial entre les deux vues.

note : la quantité nommée ici "altitude" est en fait une distance séparant un point du sol 19 au plan $[x,y]$ du lidar embarqué, mesurée selon l'axe $z$.

En combinant les équations (1) et (2) ci-dessus, on obtient l'équation suivante :

$$z_2 - z_1 = \frac{\partial z}{\partial x} \Delta x + \frac{\partial z}{\partial y} \Delta y + \Delta z$$

Ou, en écriture matricielle :

équation 3 :

$$z_2 - z_1 = \begin{bmatrix} \dfrac{\partial z}{\partial x} & \dfrac{\partial z}{\partial y} & 1 \end{bmatrix} \begin{bmatrix} \Delta x \\ \Delta y \\ \Delta z \end{bmatrix} \tag{3}$$

A partir de cette expression, appliquée à trois points $[x_1, y_1]$, $[x_2, y_2]$ et $[x_3, y_3]$ du plan $[x, y]$ où on relève les écart d'altitude $\delta z$ et les deux composantes $\dfrac{\partial z}{\partial x}$ et $\dfrac{\partial z}{\partial y}$ du gradient d'altitude, on obtient un système linéaire de trois équations à trois inconnues ($\Delta x$, $\Delta y$ et $\Delta z$) :

$$\begin{bmatrix} \delta z_1 \\ \delta z_2 \\ \delta z_3 \end{bmatrix} = \begin{bmatrix} \partial z_1/\partial x_1 & \partial z_1/\partial y_1 & 1 \\ \partial z_2/\partial x_2 & \partial z_2/\partial y_2 & 1 \\ \partial z_3/\partial x_3 & \partial z_3/\partial y_3 & 1 \end{bmatrix} \begin{bmatrix} \Delta x \\ \Delta y \\ \Delta z \end{bmatrix}$$

Si le terrain n'est pas plat, on peut trouver 3 points tels que le système ne soit pas lié. La résolution du système fournit alors le décalage $[\Delta x\ \Delta y\ \Delta z]^T$ recherché.

L'image étant bruitée mais composée de centaines de points, on utilise avantageusement la méthode des moindres carrés sur le plus grand nombre possible de points de l'image.

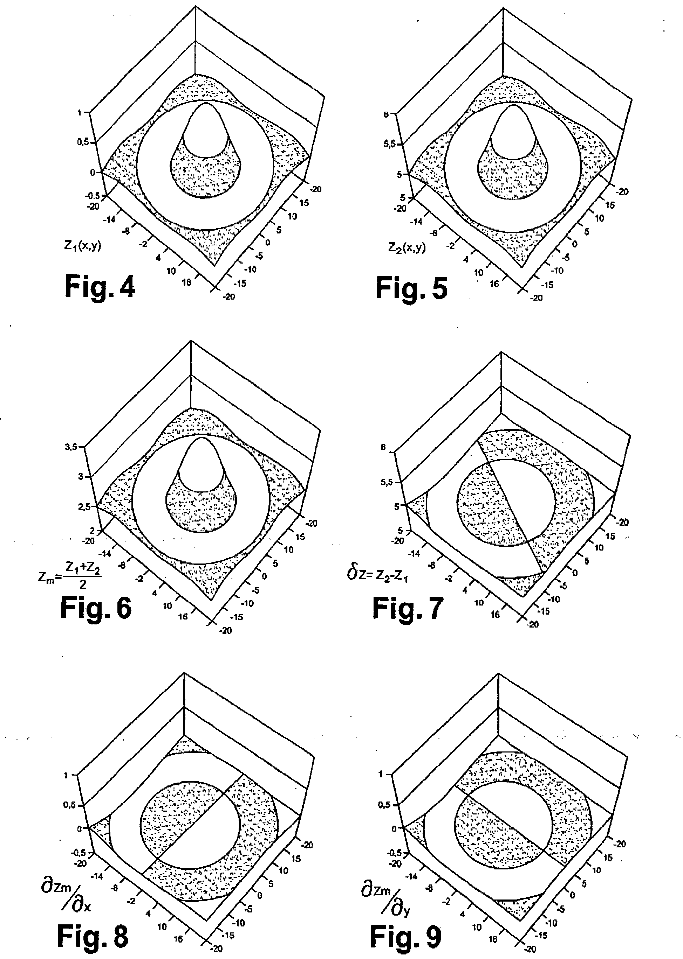

Les principales étapes de l'algorithme de calcul du décalage entre deux images (ou séries de plots à trois dimensions) sont schématiquement illustrées figures 4 à 9 où :

- les figures 4 et 5 illustrent respectivement, en vue en perspective, deux nappes surfaciques $z_1(x,y)$ et $z_2(x,y)$, correspondant à deux images successives du relief d'une région du sol balayée par le lidar ;

- les figures 6 et 7 illustrent respectivement, en vue en perspective, une nappe moyenne $z_m$ et une nappe différence $\delta z$, qui sont respectivement calculées à partir des nappes $z_1$ et $z_2$ par les formules :

- $z_m = (z_1 + z_2)/2$ ; et

- $\delta z = z_1 - z_2$

- les figures 8 et 9 illustrent respectivement, en vue en perspective, une première nappe dérivée de la nappe moyenne $z_m$ et une seconde nappe dérivée de la nappe moyenne $z_m$, respectivement selon $x$ et $y$, soit $\dfrac{\partial z_m}{\partial x}$ et $\dfrac{\partial z_m}{\partial y}$ respectivement.

Pour calculer numériquement l'image "moyenne" (figure 6) et l'image "différence" (figure 7) des deux images des figures 4 et 5, on les rééchantillonne sur une grille commune, carrée, et de pas s, du plan $[x, y]$.

Des approximations des images "dérivées partielles" par rapport à $x$ (figure 8) et à $y$ (figure 9) sont ensuite obtenues en divisant l'écart entre les deux altitudes adjacentes au plot considéré le long de l'axe considéré par deux fois le pas $s$ de la grille selon les formules suivantes :

$$\frac{\partial z}{\partial x}\bigg|_{i,j} \approx \frac{z_{i+1,j} - z_{i-1,j}}{2s} \qquad \text{et} \qquad \frac{\partial z}{\partial y}\bigg|_{i,j} \approx \frac{z_{i,j+1} - z_{i,j-1}}{2s}$$

Note : les altitudes ($z_{ij}$) manipulées dans les formules ci-dessus sont les altitudes de l'image moyenne (figure 6) entre les deux images d'entrée (figures 4 et 5).

Pour l'identification des coefficients ou composantes $\Delta x$, $\Delta y$, et $\Delta z$ du décalage entre les images initiales, on applique la méthode des "moindres carrés avec constante" entre l'image "différence" (variable dépendante) et les deux images "dérivées partielles" par rapport à x et à y (variables indépendantes) :

$$[\text{différence}] = [\text{dérivée partielle} / x] * \Delta x + [\text{dérivée partielle} / y] * \Delta y + \Delta z$$

En partant de l'équation (3), pour un point d'indice "i" quelconque (cet indice balaye ici la surface complète de l'image) et en notant $p_{x_i}$ et $p_{y_i}$ ($p$ comme pente) les dérivées partielles locales en ce point selon les axes $x$ et $y$ respectivement, les calculs se développent comme suit :

L'équation (3) peut s'écrire sous la forme suivante :

$$\delta z_i = \begin{bmatrix} p_{x_i} & p_{y_i} & 1 \end{bmatrix} \begin{bmatrix} \Delta x \\ \Delta y \\ \Delta z \end{bmatrix}$$

On transforme cette équation en multipliant ses deux membres par la transposée de la matrice des pentes :

$$\begin{bmatrix} p_{x_i} \\ p_{y_i} \\ 1 \end{bmatrix} \delta z_i = \begin{bmatrix} p_{x_i} \\ p_{y_i} \\ 1 \end{bmatrix} \begin{bmatrix} p_{x_i} & p_{y_i} & 1 \end{bmatrix} \begin{bmatrix} \Delta x \\ \Delta y \\ \Delta z \end{bmatrix} = \begin{bmatrix} p_{x_i}^2 & p_{x_i} p_{y_i} & p_{x_i} \\ p_{x_i} p_{y_i} & p_{y_i}^2 & p_{y_i} \\ p_{x_i} & p_{y_i} & 1 \end{bmatrix} \begin{bmatrix} \Delta x \\ \Delta y \\ \Delta z \end{bmatrix}$$

Par sommation de l'équation ci-dessus pour un grand nombre de points, on obtient l'équation suivante :

$$\sum_i \begin{bmatrix} \delta z_i p_{x_i} \\ \delta z_i p_{y_i} \\ \delta z_i \end{bmatrix} = \sum_i \begin{bmatrix} p_{x_i}^2 & p_{x_i} p_{y_i} & p_{x_i} \\ p_{x_i} p_{y_i} & p_{y_i}^2 & p_{y_i} \\ p_{x_i} & p_{y_i} & 1 \end{bmatrix} \begin{bmatrix} \Delta x \\ \Delta y \\ \Delta z \end{bmatrix}$$

Cette dernière équation conduit à l'expression suivante du décalage $\vec{d}$ recherché entre les deux images initiales :

équation 4 :

$$\vec{d} = \begin{bmatrix} \Delta x \\ \Delta y \\ \Delta z \end{bmatrix} = \left( \sum_i \begin{bmatrix} p_{x_i}^2 & p_{x_i} p_{y_i} & p_{x_i} \\ p_{x_i} p_{y_i} & p_{y_i}^2 & p_{y_i} \\ p_{x_i} & p_{y_i} & 1 \end{bmatrix} \right)^{-1} \sum_i \begin{bmatrix} p_{x_i} \delta z_i \\ p_{y_i} \delta z_i \\ \delta z_i \end{bmatrix}$$

Ainsi, cette équation est utilisée par le module 16, 116, 216, 316, 416 (figures 1, 11, 12, 15, 18 respectivement) de calcul de décalage entre deux images successivement formées à partir des plots de mesure du lidar.

Le traitement des images successives fournies par le Lidar inclue en outre le calcul d'une matrice de covariance $V$ de l'erreur affectant l'écart ou décalage ainsi déterminé ; ce calcul est effectué par le module 117, 217, 317, 417 respectif des figures 11, 12, 15 et 18.

Cette matrice de covariance caractérise la qualité de l'aide de vitesse (vitesse observée), qui dépend à chaque instant de la morphologie du terrain et des obstacles survolés et, dans une moindre mesure, de la qualité du télémètre (finesse du faisceau, niveau vibratoire dans les dispositifs de déflection, etc...). En présence de terrain complètement plan, le dispositif n'est plus en mesure de fournir de quelconque information sur la composante de vitesse dans le plan du terrain survolé, qui est généralement sensiblement horizontal. Les termes correspondants de la matrice de covariance de l'erreur de vitesse observée (i.e. les variances des composantes Nord et Est - si le terrain est horizontal) tendent vers l'infini.

En revanche, en présence de reliefs et sous réserve que le pas de balayage soit suffisamment fin pour éviter les repliements de "fréquence spatiale", les variances d'erreur horizontale décroissent.

De manière schématique, l'algorithme d'extraction de vecteur vitesse « observée » se présente comme suit : l'entrée de l'algorithme est formée de l'ensemble de $2N$ plots ou vecteurs à trois dimensions constituant deux images. Les symboles $\theta_{Bi}$, $\Psi_{Bi}$ et $\rho_{Bi}$ désignent respectivement le gisement, le site et la longueur du faisceau laser (ou Laser Beam, d'où les suffixes "$B$") pour plot d'indice $i$. On convient que le gisement, le site et la longueur du plot $i$ forment collectivement le vecteur $\vec{r}_i$.

La sortie $\vec{v}$ de l'algorithme est constituée de trois composantes de vitesse.

L'algorithme est purement combinatoire (i.e. il ne possède pas de mémoire). Il consiste donc en 3 expressions analytiques :

$$v_x = \frac{d_x(\theta_{Bi}, \psi_{Bi}, \rho_{Bi})}{\tau}$$

$$v_y = \frac{d_y(\theta_{Bi}, \psi_{Bi}, \rho_{Bi})}{\tau} \quad \text{ou, vectoriellement,} \quad \vec{v} = \frac{\vec{d}(\vec{r}_i)}{\tau}$$

$$v_z = \frac{d_z(\theta_{Bi}, \psi_{Bi}, \rho_{Bi})}{\tau}$$

Où $\vec{d}$ est le vecteur translation entre les deux images; et $\tau$ est le temps séparant les deux images.

$\vec{d}$ est une fonction vectorielle des $6N$ variables (ou $2N$ triplets) $\theta_{Bi}$, $\Psi_{Bi}$, $\rho_{Bi}$.

Dans l'implémentation de l'algorithme, chacune de ces variables est affectée d'une erreur.

Soient $\tilde{\theta}_{Bi}$, $\tilde{\Psi}_{Bi}$ et $\tilde{\rho}_{Bi}$ ces erreurs, affectant les mesures de site, gisement et distance.

Si la fonction $\vec{d}$ est linéaire, on déduit immédiatement l'erreur résultante sur $\vec{v}$ :

équation 5 :

$$\tilde{v} = \frac{1}{\tau}\sum_i \begin{bmatrix} \dfrac{\partial d_x}{\partial \theta_{Bi}} & \dfrac{\partial d_x}{\partial \psi_{Bi}} & \dfrac{\partial d_x}{\partial \rho_{Bi}} \\[2mm] \dfrac{\partial d_y}{\partial \theta_{Bi}} & \dfrac{\partial d_y}{\partial \psi_{Bi}} & \dfrac{\partial d_y}{\partial \rho_{Bi}} \\[2mm] \dfrac{\partial d_z}{\partial \theta_{Bi}} & \dfrac{\partial d_z}{\partial \psi_{Bi}} & \dfrac{\partial d_z}{\partial \rho_{Bi}} \end{bmatrix} \begin{bmatrix} \tilde{\theta}_{Bi} \\[2mm] \tilde{\psi}_{Bi} \\[2mm] \tilde{\rho}_{Bi} \end{bmatrix} \quad \text{ou, vectoriellement,} \quad \tilde{v} = \frac{1}{\tau}\sum_i \frac{\partial \vec{d}}{\partial \vec{r}_i}\tilde{r}_i$$

Si la fonction $\vec{d}$ n'est pas linéaire, l'expression de l'erreur de vitesse ci-dessus reste valide, à condition que les erreurs d'entrée soient de faible amplitude. Cette condition est toujours réalisée dans la pratique.

On notera que, quelle que soit l'expression mathématique de $\vec{d}$, il est toujours possible d'établir la matrice des dérivées partielles apparaissant dans l'équation 5, puisque toute expression analytique est dérivable.

On suppose que les trois erreurs sur les mesures du site, du gisement et de la distance d'un plot sont indépendantes.

La matrice de covariance de ces trois erreurs est alors :

$$R = \begin{bmatrix} \sigma^2_{\theta_{Bi}} & 0 & 0 \\[2mm] 0 & \sigma^2_{\psi_{Bi}} & 0 \\[2mm] 0 & 0 & \sigma^2_{\rho_{Bi}} \end{bmatrix}$$

Où $\sigma_{\theta_{Bi}}$, $\sigma_{\psi_{Bi}}$ et $\sigma_{\rho_{Bi}}$ sont les écarts-types des erreurs sur le site, le gisement et la distance respectivement. Les termes non diagonaux (les covariances) sont nuls du fait de l'hypothèse d'indépendance.

On fait en outre l'hypothèse que les erreurs de mesure des plots successifs sont elles aussi indépendantes (ou, en d'autres termes, qu'il s'agit de bruits "blancs"). On tire alors de l'équation 5 la matrice de covariance "a priori" de l'erreur de vitesse :

Équation 6 :

$$V = \mathrm{cov}\left(\widetilde{\vec{v}}\right) = \frac{1}{\tau^2} \sum_i \begin{bmatrix} \dfrac{\partial d_x}{\partial \theta_{Bi}} & \dfrac{\partial d_x}{\partial \psi_{Bi}} & \dfrac{\partial d_x}{\partial \rho_{Bi}} \\[2mm] \dfrac{\partial d_y}{\partial \theta_{Bi}} & \dfrac{\partial d_y}{\partial \psi_{Bi}} & \dfrac{\partial d_y}{\partial \rho_{Bi}} \\[2mm] \dfrac{\partial d_z}{\partial \theta_{Bi}} & \dfrac{\partial d_z}{\partial \psi_{Bi}} & \dfrac{\partial d_z}{\partial \rho_{Bi}} \end{bmatrix} \begin{bmatrix} \sigma_{\theta_{Bi}}^2 & 0 & 0 \\ 0 & \sigma_{\psi_{Bi}}^2 & 0 \\ 0 & 0 & \sigma_{\rho_{Bi}}^2 \end{bmatrix} \begin{bmatrix} \dfrac{\partial d_x}{\partial \theta_{Bi}} & \dfrac{\partial d_y}{\partial \theta_{Bi}} & \dfrac{\partial d_z}{\partial \theta_{Bi}} \\[2mm] \dfrac{\partial d_x}{\partial \psi_{Bi}} & \dfrac{\partial d_y}{\partial \psi_{Bi}} & \dfrac{\partial d_z}{\partial \psi_{Bi}} \\[2mm] \dfrac{\partial d_x}{\partial \rho_{Bi}} & \dfrac{\partial d_y}{\partial \rho_{Bi}} & \dfrac{\partial d_z}{\partial \rho_{Bi}} \end{bmatrix}$$

$$\mathrm{cov}\left(\widetilde{\vec{v}}\right) = \frac{1}{\tau^2} \sum_i \frac{\partial \vec{d}}{\partial \vec{r}_i} R \frac{\partial \vec{d}}{\partial \vec{r}_i}^{T}$$

ou, vectoriellement,

Il suffit donc de connaître l'amplitude des bruits inhérents au capteur (TAB) - ou leur matrice de covariance - pour en déduire la matrice $V$ (figures 11, 12, 15, 18) de covariance affectant l'extraction du vecteur vitesse à partir des images ou séries de plots.

Le calcul du décalage (vecteur) $\vec{d}$ et consécutivement de l'écart de vitesse, est réalisé par le module 16, 116, 216, 316, 416 respectif des figures 1, 11, 12, 15, 18, tandis que le calcul de la matrice $V$ de covariance des erreurs affectant cet écart est réalisé par le module 117, 217, 317, 417 respectif des figures 11, 12, 15, 18.

Dans certains cas, on pourra négliger les erreurs sur les angles de site et de gisement ($\sigma_{\theta_{Bi}}$ =0 et $\sigma_{\psi_{Bi}}$ =0) et ne considérer que l'erreur de distance. Si de plus on admet que l'écart-type de cette erreur est constant (i.e. indépendant par exemple de la distance elle même) : $\sigma_{\theta_B}$, l'expression de l'équation 6 se simplifie alors comme suit :

$$\mathrm{cov}\left(\widetilde{\vec{v}}\right) = \frac{\sigma_{\rho_B}^2}{\tau^2} \sum_i \begin{bmatrix} \dfrac{\partial d_x}{\partial \rho_{Bi}} \\[2mm] \dfrac{\partial d_y}{\partial \rho_{Bi}} \\[2mm] \dfrac{\partial d_z}{\partial \rho_{Bi}} \end{bmatrix} \begin{bmatrix} \dfrac{\partial d_x}{\partial \rho_{Bi}} & \dfrac{\partial d_y}{\partial \rho_{Bi}} & \dfrac{\partial d_z}{\partial \rho_{Bi}} \end{bmatrix} \qquad (6')$$

Estimation du vecteur vitesse « observée » par association d'un télémètre et d'une caméra.

Comme il vient d'être décrit, pour mesurer un vecteur vitesse « observée », on fait la différence entre deux images successives de plots, puis on estime la vitesse « observée » par moindres carrés.

On dispose de plots 3D acquis avec les informations de site, de gisement de distance, d'attitude (cap, roulis, tangage) et de datation (temps où le plot a été acquis). A partir de ces informations on redresse les plots dans un espace cartésien et on obtient $x$, $y$ et $z$.

Pour calculer le vecteur vitesse « observée » uniquement à partir des mesures d'un télémètre, on applique de préférence la méthode différentielle à deux séries d'acquisition de plots redressés et datés.

Cependant en absence de relief au sol, comme illustré schématiquement figure 10, une méthode de calcul basée sur les « altitudes » $z$ fonction des $x$ et $y$ du plan devient inopérante. L'altitude gardant la même valeur, il manque une information afin d'estimer un décalage dans l'espace.

Pour pallier à ce problème, on utilise une caméra observant la région du sol balayée par le télémètre.

Selon cette variante de l'invention, on utilise un imageur 2D, par exemple une caméra FLIR et/ou une caméra BNL (Bas Niveau de Lumière). Un traitement des images successives similaire à celui décrit précédemment fournit un décalage en pixels d'image, ce qui correspond à un décalage angulaire (décalage de l'image dans le champ de la caméra). Ce décalage angulaire n'est pas directement exploitable pour l'estimation de la vitesse linéaire. Par contre, la combinaison de ce décalage avec les mesures issues du TAB permet de connaître la distance de chacun des points de l'image IR ou BNL, et donc de convertir la vitesse angulaire observée en une vitesse linéaire.

Par caméra on entend tout type de capteur passif capturant et mesurant l'intensité d'une longueur d'onde à un endroit donné sur une image. Par exemple, une caméra Infra rouge fournit une image dont le contraste de luminance visible est proportionnel au contraste thermique de l'objet observé. Le contraste de luminance relatif à une surface étudiée est appelé l'intensité et notée $I$.

On utilise les notations suivantes :

- les données fournies par la caméra forment une matrice de pixels ; on associe à chaque pixel de la caméra des coordonnées $x$ et $y$ et une intensité notée $I$ ;

- pour le télémètre, on utilise les coordonnées cartésiennes de l'espace observé redressées, que l'on note $(x_1, y_1, z_1)$ ;

- $f$ est la distance focale de la caméra.

Pour chaque point de coordonnée $(x, y)$ dans le plan focal de la caméra, on associe un point $(x_1, y_1)$ correspondant dans le repère du télémètre, et l'intensité lumineuse $I(x,y)$ de ce point.

Grâce à cette correspondance, on forme une image redressée en appliquant les deux formules suivantes :

$$\frac{x}{\sqrt{x^2 + f^2}} = -\frac{x_t}{z_t}$$

$$\frac{y}{\sqrt{y^2 + f^2}} = -\frac{y_t}{z_t}$$

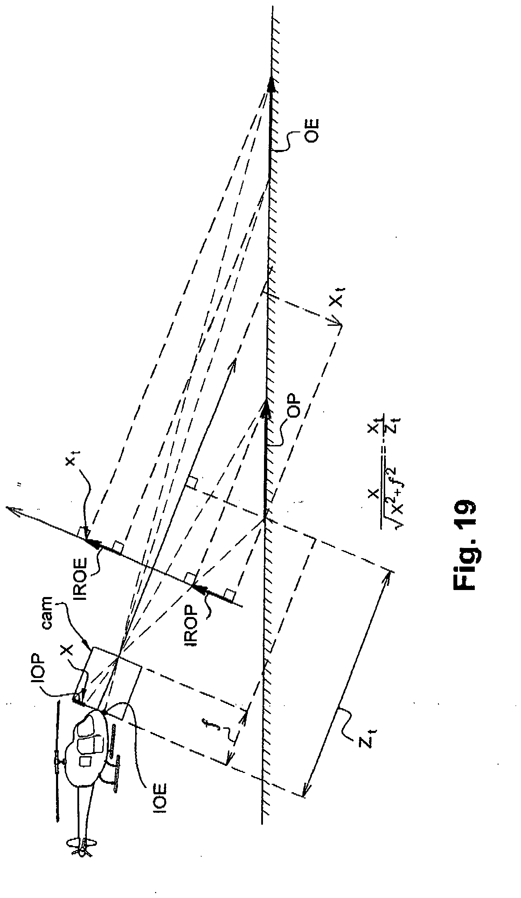

Cette transformation illustrée figure 19 permet d'obtenir les projections géométriques IROP et IROE (dans le plan [xt, yt]) à partir des projections optiques IOP et IOE dans le plan focal de la caméra CAM. Cette figure 19 illustre bien le rapetissement de la projection optique IOE de l'objet éloigné OE par rapport à la projection optique IOP de l'objet proche OP, alors que les projections géométriques IROE et IROP retrouvent leurs proportions respectives.

Pour augmenter le nombre de points d'image utilisables, la caméra et le télémètre doivent avoir sensiblement le même champ et la même direction d'observation ; en outre,le dispositif comporte des moyens de synchronisation des acquisitions réalisées par ces deux appareils.

Par ailleurs, l'image télémètre est de préférence re-échantillonnée pour coïncider avec les pixels de la caméra.

L'extraction d'une deuxième observation du vecteur vitesse se fait en utilisant deux images redressées successives séparées d'un intervalle de temps T connu.

Pour mesurer la vitesse, il faut identifier le décalage métrique $\vec{d}$ entre ces deux images. La vitesse recherchée est alors $v_c = \dfrac{\vec{d}}{\tau}$. Pour identifier ce décalage, plusieurs méthodes d'imagerie sont utilisables (différentielle, corrélation ou paramétrique) avec deux (ou plusieurs) images acquises successivement.

On décrit ci-après la méthode différentielle qui est proche du traitement décrit précédemment pour les mesures issues du seul télémètre, mais en deux dimensions au lieu de trois.

On forme d'abord les deux images dérivées partielles de l'intensité, respectivement par rapport aux coordonnées $x$ et $y$, qui sont notées :

$$\frac{\partial I}{\partial x}(x, y), \ \frac{\partial I}{\partial y}(x, y)$$

On forme par ailleurs l'image différence entre les deux images successives d'intensités respectives $I_1$ et $I_2$, en appliquant la formule :

$$\delta I(x, y) = I_2(x, y) - I_1(x, y)$$

12

La relation liant, pour chaque point de coordonnées ($x,y$), la différence d'intensité et les deux dérivées partielles de cette intensité est (développement au 1er ordre et sous réserve que le décalage soit petit) :

$$\delta I(x,y) = \frac{\partial I}{\partial x}\Delta x + \frac{\partial I}{\partial y}\Delta y$$

Ou, sous forme matricielle :

$$\delta I(x,y) = \begin{bmatrix} \dfrac{\partial I}{\partial x} & \dfrac{\partial I}{\partial y} \end{bmatrix} \begin{bmatrix} \Delta x \\ \Delta y \end{bmatrix}$$

En multipliant les deux termes de l'équation précédente par $\begin{bmatrix} \dfrac{\partial I}{\partial x} \\ \dfrac{\partial I}{\partial y} \end{bmatrix}$, puis en sommant pour tous les points du plan image, en associant à chaque pixel ($x,y$) un indice $i$, en notant $\delta I_i$ la différence d'intensité de ce même pixel entre deux images successives acquises par la caméra, et en appliquant la méthode des moindres carrés, on aboutit à l'expression suivante :

$$\sum_i \begin{bmatrix} \dfrac{\partial I}{\partial x_i} \\ \dfrac{\partial I}{\partial y_i} \end{bmatrix} \delta I_i = \left( \sum_i \begin{bmatrix} \dfrac{\partial I}{\partial x_i} \\ \dfrac{\partial I}{\partial y_i} \end{bmatrix} \begin{bmatrix} \dfrac{\partial I}{\partial x_i} & \dfrac{\partial I}{\partial y_i} \end{bmatrix} \right) \begin{bmatrix} \Delta x \\ \Delta y \end{bmatrix}$$

ce qui équivaut à l'expression suivante qui permet de calculer le décalage $\vec{d}$ (dans le repère fixe lié à la position qu'occupait le porteur à l'instant $t_0$) :

$$\vec{d} = \begin{bmatrix} \Delta x \\ \Delta y \end{bmatrix} = \left( \sum_i \begin{bmatrix} \dfrac{\partial I^2}{\partial x_i^2} & \dfrac{\partial I^2}{\partial x_i \partial y_i} \\ \dfrac{\partial I^2}{\partial x_i \partial y_i} & \dfrac{\partial I^2}{\partial y_i^2} \end{bmatrix} \right)^{-1} \sum_i \begin{bmatrix} \dfrac{\partial I}{\partial x_i} \\ \dfrac{\partial I}{\partial y_i} \end{bmatrix} \delta I_i$$

L'avantage de cette variante de l'invention est de fournir une information de vitesse observée dans les cas de survol de terrains plats - où le télémètre n'observe aucun décalage d'image à image, à condition que l'imageur FLIR ou BNL observe un contraste de luminance.

Hybridation des mesures inertielles et de la vitesse « observée » par filtre de Kalman

Le filtre d'hybridation peut prendre différentes formes dont certaines sont détaillées figures 11 à 18 et décrites ci-après. L'intérêt de ce filtre est de tirer le meilleur parti de ses deux catégories de mesures (données) d'entrée : la stabilité court terme de la mesure inertielle et la précision long terme de l'estimation de vitesse observée basée sur l'évaluation de l'écart de position (de décalages) entre des images successives.

Selon une variante de réalisation, le rangement des mesures dans les mémoires d'images peut se faire sans tenir compte de la vitesse, auquel cas la sortie de l'identificateur de décalage fournit une mesure de la vitesse elle-même plutôt qu'un écart de vitesse.

Selon une autre variante, le traitement des images successives est effectué non pas sur deux images, mais sur trois images ou davantage ; selon une autre variante, ce traitement est effectué sur des images plus espacées dans le temps que d'un seul cycle image, plutôt que sur des images strictement consécutives.

Notations utilisées en relation avec les figures 11 à 18.

Une grandeur physique scalaire (par exemple la composante Nord de vitesse sol) est notée en lettre minuscule, par exemple $x$.

La mesure directe (exemple : la mesure d'un champ magnétique par un magnétomètre) de cette grandeur est affectée de l'indice m et notée $x_m$.

L'estimé de cette grandeur physique, issu d'un modèle de prédiction, est noté $\hat{x}$.

L'erreur affectant la mesure ou l'estimé de la grandeur physique est notée $\tilde{x}$.

On a donc les relations suivantes :

$$x_m = x + \tilde{x} \quad (\text{mesure} = \text{grandeur physique} + \text{erreur de mesure}) ;$$

où

$$\hat{y} = y + \tilde{y} \quad (\text{estimé} = \text{grandeur physique} + \text{erreur d'estimation}).$$

Cette notation est appliquée de la même façon aux grandeurs vectorielles. Pour une grandeur physique vectorielle (par exemple la vitesse sol) notée $\vec{x}$, la mesure directe, l'estimé et l'erreur l'affectant sont notés respectivement :

$\vec{x}_m$, $\hat{\vec{x}}$ et $\tilde{\vec{x}}$.

Pour distinguer un vecteur de l'une de ses composantes, la composante est indicée pour désigner sa position (**n**orth, **ea**st ou **d**own par exemple). Ainsi, le vecteur vitesse peut se noter $\vec{v}$, ou sous la forme du tableau colonne de

ses 3 composantes : $\begin{bmatrix} v_n \\ v_e \\ v_d \end{bmatrix}$

Pour une grandeur physique scalaire (respectivement vectorielle) notée $x$ (respectivemtent $\vec{x}$), on note **X** la variance de l'erreur $\tilde{x}$ affectant $x$ (respectivement **X** la matrice des variances et covariances de l'erreur $\tilde{\vec{x}}$ affectant $\vec{x}$).

On voit que la règle précédente conduit à une notation identique pour une matrice ou un scalaire. Pour distinguer la matrice des variances et covariances de l'une de ses composantes, la composante portera un double indice identifiant les positions des 2 composantes dont elle est issue. Ainsi, la variance de l'erreur affectant la composante nord de vitesse (notée $v_n$) sera notée $V_{nn}$ alors que la matrice des variances et covariances de l'erreur affectant le vecteur vitesse (noté $\vec{v}$) sera notée $V$. Une composante de covariance (i.e. un terme non diagonal de la matrice) sera noté avec deux indices différents (exemple : $V_{ne}$).

Dans le cas des signaux "à temps continu", un bruit blanc a une variance (ou puissance) infinie. Pour caractériser son amplitude, on considère alors la "densité spectrale de puissance" (DSP). Selon que le signal est scalaire ou vectoriel, sa DSP est respectivement scalaire ou matricielle.

On note les DSP de la même manière que les variances ou les matrices de variance covariance, i.e. en utilisant la lettre majuscule :

La DSP de l'erreur $\tilde{x}$ affectant $x$ est notée **X**;

La DSP de l'erreur $\tilde{\vec{x}}$ affectant $\bar{x}$ est notée **X**.

note : il ne peut y avoir de confusion entre une variance et une DSP, puisqu'un bruit donné est soit "à puissance finie", soit "à DSP finie".

Quand nécessaire, des indices "c" sur les mesures d'accélération et de vitesse angulaire indiquent que ces mesures sont en repère porteur (« *carrier* »).

Formulation des filtres de Kalman :

Sauf exception, les filtres de Kalman sont formulés comme suit.

$$\dot{\vec{x}} = A\vec{x} + B\vec{u}$$

$$\vec{z} = C\vec{x} + D\vec{u}$$

Où $\vec{x}$ est le vecteur d'état, $\vec{u}$ le vecteur de commande, et $\vec{z}$ l'observation. A, B, C et D sont des matrices.

La matrice des variances et covariances de l'erreur affectant $\vec{u}$ est notée $U$, la matrice de DSP de l'erreur affectant $\vec{x}$ est notée $X$.

Dans les cas où le vecteur d'état se résume à un unique paramètre physique (par exemple le vecteur vitesse $\vec{v}$), le nom usuel de ce paramètre physique est adopté plutôt que le nom générique $\vec{x}$. La même règle s'applique aux vecteurs de commande et d'observation.

Dans la plupart des filtres présentés, la mesure inertielle est constituée des deux vecteurs accélération et rotation. Dans ces cas là, ces 2 mesures sont notées collectivement $\vec{u}$ (car il s'agit du vecteur de commande). De manière similaire, dans les exemples de réalisation où on utilise un imageur, on a 2 observations de vitesse. Le vecteur formé de ces deux observations ne peut pas être noté $\vec{v}$, car il ne s'agit pas d'une vitesse). Il est alors noté $\vec{z}=[v_{nt}\ v_{et}\ v_{dt}\ v_{nc}\ v_{ec}\ v_{dc}]^T$ (les indices t et c désignant respectivement le télémètre et la caméra).

Définition des variables utilisées figures 11 à 18 :

| | |
|---|---|
| $\vec{u}$ | $=\overline{[\gamma\,\omega]}^T$ vecteur de commande formé des 2 mesures d'accélération et de vitesse angulaire |
| $U$ | $\begin{bmatrix} \Gamma & 0 \\ 0 & \Omega \end{bmatrix}$ matrice de covariance des erreurs des mesures inertielles (les termes non diagonaux sont nuls du fait de l'hypothèse d'indépendance des erreurs d'accélération et de vitesse angulaire) |
| $\vec{\gamma}$ | accélération "vraie" en repère porteur |
| $\vec{\gamma_m}$ | accélération mesurée par les 3 accéléromètres (organisés en trièdre) liés au porteur |
| $\vec{w}_{\gamma}$ | bruit blanc générateur du bruit d'accéléromètre (intervient dans la modélisation markovienne de ce bruit) |
| $\widetilde{\vec{\gamma}}$ | erreur (ou bruit) de mesure d'accélération |
| $\hat{\vec{\gamma}}_B$ | estimé du biais de l'accéléromètre en sortie du filtre de Kalman |
| $\delta\vec{\gamma}_B$ | dérivée de l'estimé de biais d'accéléromètre (l'une des composantes du vecteur de correction de Kalman) |
| $\Gamma$ | $= \begin{bmatrix} \Gamma_{xx} & 0 & 0 \\ 0 & \Gamma_{yy} & 0 \\ 0 & 0 & \Gamma_{zz} \end{bmatrix}$ matrice de covariance des erreurs des mesures d'accélération. Les termes non diagonaux sont nuls du fait de l'hypothèse d'indépendance des bruits affectant chacune des 3 composantes |
| $\vec{\omega}$ | vitesse angulaire "vraie" en repère porteur |
| $\vec{\omega_m}$ | vitesse angulaire mesurée par les 3 gyromètres (organisés en trièdre) liés au porteur |
| $\vec{W}_{\omega}$ | bruit blanc (**white**) intervenant dans la modélisation markovienne du générateur du bruit affectant la mesure de vitesse angulaire) |
| $\widetilde{\vec{\omega}}$ | erreur (ou bruit) de mesure de vitesse angulaire |
| $\hat{\vec{\omega}}_B$ | estimé du biais de gyromètre en sortie du filtre de Kalman |
| $\delta\vec{\omega}_B$ | dérivée de l'estimé du biais de gyromètre (l'une des composantes du vecteur de correction de Kalman) |

(suite)

| | |
|---|---|
| $\Omega$ | $=\begin{bmatrix} \Omega_{xx} & 0 & 0 \\ 0 & \Omega_{yy} & 0 \\ 0 & 0 & \Omega_{zz} \end{bmatrix}$ matrice de covariance des erreurs des mesures de vitesse angulaire. Les termes non diagonaux sont nuls du fait de l'hypothèse d'indépendance des bruits affectant chacune des 3 composantes |
| $\hat{\varphi},\ \hat{\theta},\ \hat{\psi}$ | estimés des angles de roulis, de tangage et de cap magnétique respectivement, en sortie du filtre de Kalman |
| $\tilde{\bar{\theta}}$ | erreur de PFV : les 3 composantes sont les 3 petits angles d'Euler entre le vrai repère géographique et celui de la PFV (on notera qu'il ne s'agit pas directement des erreurs sur les angles $\hat{\varphi},\ \hat{\theta},\ \hat{\psi}$, mais qu'on peut calculer ces dernières à partir de $\overline{\theta}$ et de $\hat{\varphi},\ \hat{\theta},\ \hat{\psi}$). |
| $\overline{\delta\theta}$ | dérivée de l'estimé de l'erreur de PFV (l'une des composantes du vecteur de correction de Kalman) |
| $\hat{\bar{v}}$ | estimé de vitesse sol en sortie du filtre de Kalman |
| $\tilde{\bar{v}}$ | erreur affectant l'estimé de vitesse sol ( $\tilde{\bar{v}} = \hat{\bar{v}} - \vec{v}$ ) |
| $\overline{v}_{air}$ | vecteur vitesse air (i.e. vitesse de l'aéronef par rapport à un repère orienté géographiquement, mais lié à la masse d'air) |
| $\overline{v}_{airm}$ | mesure du module du vecteur vitesse air (i.e. vitesse de l'aéronef par rapport à un repère orienté géographiquement, mais lié à la masse d'air) par la centrale anémobarométrique |
| $\hat{\bar{v}}_{air}$ | estimé du vecteur vitesse air |
| $\hat{\bar{w}}$ | estimé du vent (2 composantes Nord et Est, la composante verticale étant supposée nulle) |
| $\tilde{\bar{w}}$ | erreur sur l'estimé du vent |
| $\overline{\delta w}$ | dérivée de l'estimé du vent (l'une des composantes du vecteur de correction de Kalman) |
| $\tilde{\bar{v}}_{air}$ | erreur affectant l'estimé du vecteur vitesse air |
| $\hat{v}_{air}$ | estimé du module du vecteur vitesse air |
| $\tilde{v}_{air}$ | erreur affectant l'estimé du module du vecteur vitesse air |
| $v_v$ | vitesse verticale (composante verticale du vecteur vitesse sol $\overline{v}$) |
| $\hat{v}_v$ | estimé de la vitesse verticale (composante verticale de l'estimé du vecteur vitesse sol $\hat{\bar{v}}$) |
| $\hat{v}_{vh}$ | estimée de la vitesse verticale barométrique (duplication du terme précédent) |
| $\tilde{v}_v$ | erreur affectant l'estimé de la vitesse verticale |
| $\overline{h}_e$ | champ magnétique terrestre |
| $\hat{\bar{h}}_e$ | estimé du champ magnétique terrestre |
| $\tilde{\bar{h}}_e$ | erreur affectant l'estimé du champ magnétique terrestre |
| $\overline{\delta h}_e$ | dérivée de l'estimé du champ magnétique terrestre (l'une des composantes de la correction de Kalman) |
| $\overline{h}_c$ | champ perturbateur lié au porteur et généré par celui-ci |

(suite)

| | |
|---|---|
| $\hat{\bar{h}}_c$ | estimée du champ perturbateur |
| $\tilde{\bar{h}}_c$ | erreur affectant l'estimé du champ perturbateur |
| $\delta \bar{h}_c$ | dérivée de l'estimé du champ perturbateur (l'une des composantes de la correction de Kalman) |
| $\bar{h}$ | champ total en repère porteur |
| $\hat{\bar{h}}$ | estimé du champ total en repère porteur |
| $\bar{h}_m$ | champ mesuré par le magnétomètre |
| $\tilde{\bar{h}}_c$ | bruit affectant l'estimé du champ |
| $\tilde{\bar{h}}_c$ | erreur affectant l'estimé du champ perturbateur |
| $z^{-1}$ | opérateur de retard, utilisé dans les schémas pour illustrer le stockage de "l'image précédente" |
| $g_{earth}$ | accélération de la pesanteur (-9.80655m/s$^2$ au niveau de la mer) |
| $G$ | matrice reliant l'erreur de plateforme $\tilde{\bar{\theta}}$ aux erreurs de projection d'accélération $$\Gamma = \begin{bmatrix} 0 & \gamma_V & -\gamma_E \\ -\gamma_V & 0 & \gamma_N \\ \gamma_E & -\gamma_N & 0 \end{bmatrix}.$$ |
| $B$ | matrice de changement de repère (passage du repère véhicule au repère géographique magnétique) |
| $D_V$ | matrice reliant l'erreur affectant l'estimé du vecteur vitesse air à l'erreur affectant le module de la vitesse air $$D_V = \frac{1}{\|V_{air}\|}\begin{bmatrix} V_{airN} & V_{airE} & V_{airV} \end{bmatrix}$$ (approximation linéaire pour les petites amplitudes d'erreur). |
| $H$ | matrice reliant l'erreur de plateforme $\tilde{\bar{\theta}}$ aux erreurs de projection du champ magnétique. $$H = \begin{bmatrix} 0 & h_V & -h_E \\ -h_V & 0 & h_N \\ h_E & -h_N & 0 \end{bmatrix}.$$ |
| $K$ | matrice de gain de contre-réaction du filtre, ou gain "de Kalman" |

Une forme simple de réalisation du système d'hybridation est représentée figure 11.

Dans cette forme du filtre, on entretient une estimation de la vitesse par intégration (par un intégrateur 100) d'une mesure d'accélération en repère géographique. Le vecteur accélération $\vec{\gamma}_{geo}$ (i.e. ses trois composantes) est la seule donnée inertielle issue de l'IMU.

L'indice "geo" de l'accélération $\vec{\gamma}_{geo}$ indique qu'elle est exprimée en repère géographique.

Les angles d'assiette et de cap $\varphi_m$, $\theta_m$, $\Psi_m$ nécessaires à la conversion des plots (par un module 112 de conversion de repère) avant leur stockage dans la mémoire d'image 114, sont issus d'une AHRS ou d'une autre source disponible à bord de l'aéronef.

Le senseur inertiel utilisé est la plupart du temps "à composants liés" (ou « *strapdown* »), ce qui signifie que la mesure d'accélération est réalisée en repère porteur. Une projection en repère géographique est réalisée par un module 101 de projection.

Par contre, si le senseur inertiel est une INS à plate-forme mécanique, la mesure d'accélération y est directement réalisée en repère géographique.

Le dispositif d'hybridation consiste essentiellement en un intégrateur 100 associé à un amplificateur 102 de contre-réaction de gain K. La fonction de transfert de ce filtre est la suivante :

$$\hat{\vec{v}} = \frac{1}{1+\tau p}\vec{v}_R + \frac{\tau p}{1+\tau p}\frac{\vec{\gamma}_{geom}}{p}$$

Où : $\tau = {}^1/_K$ est la constante de temps du filtre;

$\hat{\vec{v}}$ est l'estimé de vitesse (ou vitesse hybride);

$\vec{\gamma}_{geom}$ est la mesure d'accélération en repère géographique; et

$\vec{v}_R$ la vitesse « brute » observée par le lidar et son traitement d'image associé.

Le schéma illustré figure 11 ne fait pas apparaître explicitement cette vitesse « brute », mais l'écart $(\hat{\vec{v}} - \vec{v}_R)$.

L'expression de la fonction de transfert montre la complémentarité du filtre ; en effet, si les mesures d'accélération et de vitesse étaient parfaites (i.e. non affectées d'erreurs), on aurait :

$$\hat{\vec{v}} = \frac{1}{1+\tau p}\vec{v} + \frac{\tau p}{1+\tau p}\frac{\vec{v}p}{p} = \frac{1+\tau p}{1+\tau p}\vec{v} = \vec{v}$$

(où $\vec{v}$ est la vitesse "vraie")

La sortie du filtre serait également parfaite. Ceci s'explique par le fait que si l'entrée "vitesse brute" est filtrée passe bas (ce qui permet de lui retirer du bruit), l'ajout de l'entrée accélération intégrée ($^{\gamma geom}/_p$) filtrée passe-haut avec la même constante de temps restitue exactement la partie perdue par le filtre passe-bas (i.e. la dynamique, ou les composantes haute fréquence). Cette complémentarité est indépendante de la valeur du gain K ou même de la structure (i.e. de la fonction de transfert) de la branche de contre-réaction.

On peut améliorer ce filtre en ajoutant au gain $K$ de contre-réaction un effet intégral $^{Ki}/_p$ qui permet d'estimer et de compenser un éventuel biais de mesure de l'accélération, et/ou en ajoutant un dispositif qui calcule le (les) gain(s) de contre-réaction (i.e. le gain proportionnel $K$ et l'éventuel gain intégral $K_i$) de manière optimale à chaque instant pour minimiser l'erreur sur la vitesse hybride.

Le calcul du gain optimal est de préférence basé sur une estimation des amplitudes - ou matrices de covariance - des bruits d'accélération et de vitesse (principe du filtre de Kalman)).

Ces approches sont fructueuses avec une mesure d'accélération réalisée directement en repère géographique, c'est à dire avec une INS à plate-forme mécanique pour lesquelles l'erreur peut se modéliser comme la somme d'un bruit Gaussien et d'un biais. Ce type d'équipement à plateforme mécanique est cependant ancien, et la majorité des IMUs actuelles sont de type « strapdown » et réalisent leurs mesures en repère porteur (charrier : c).

Avec une IMU « strapdown », l'erreur sur l'accélération géographique ne peut plus se modéliser comme la somme d'un biais et d'un bruit Gaussien, puisqu'il s'y ajoute des erreurs de projection qui sont fortement corrélées au profil de vol, donc non modélisables de manière stochastique.

Le mode préféré de réalisation du filtre d'hybridation est donc basé dans ce cas sur l'entretien d'une plate-forme virtuelle (PFV) dédiée, par intégration des données IMU (i.e. les trois composantes du vecteur $\vec{\gamma}_m$ d'accélération et les trois composantes du vecteur $\vec{\omega}_m$ de vitesse angulaire), et sur la mise en oeuvre d'un filtre de Kalman pour hybrider la PFV sur la vitesse observée issue du traitement des images successives délivrées par le télémètre, comme détaillé ci après.

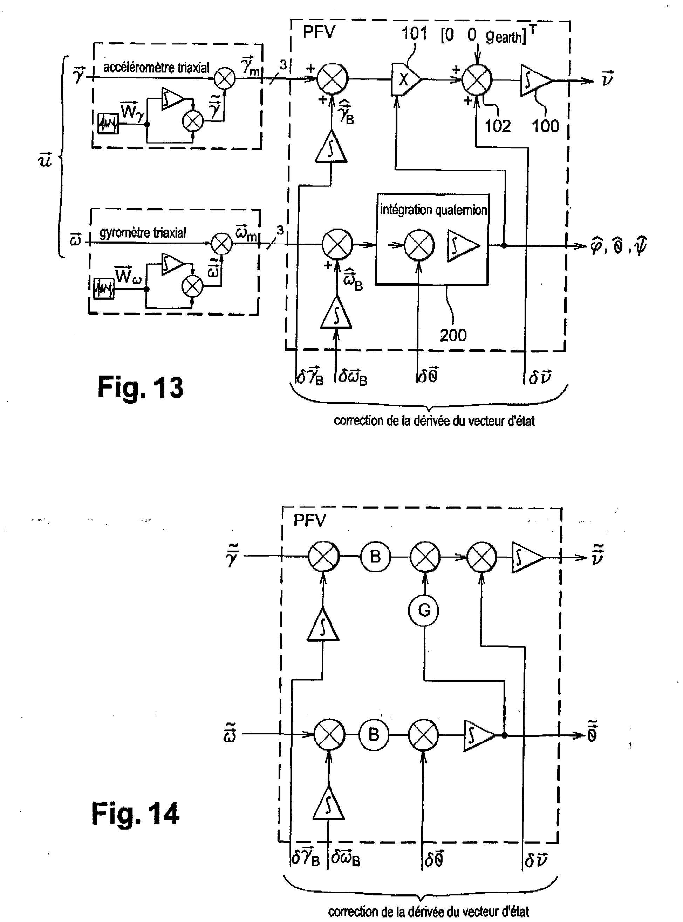

Les figures 12 et 13 illustrent l'intégration d'une plate-forme virtuelle (PFV) à partir de mesures inertielles «strapdown», et la figure 14 illustre la propagation des erreurs dans la plate-forme virtuelle.

Par intégration de la mesure de vitesse angulaire $\vec{\omega}_m$, on obtient une estimation de la position angulaire du porteur (i.e. ses angles d' "Euler" : cap, tangage et roulis). Les trois composantes de vitesse angulaire mesurées en «strapdown» n'étant pas directement égales aux dérivées des angles d'Euler, le module 200 (figure 13) réalisant cette "intégration" ne consiste pas en trois intégrateurs indépendants, mais fait appel aux quaternions pour réaliser cette opération.

La connaissance des angles d'Euler permet de projeter la mesure d'accélération du repère véhicule vers le repère géographique; la soustraction de la gravité terrestre (par l'opérateur 102) permet d'obtenir la dérivée de la vitesse ;

enfin, l'intégration de cette dérivée par l'intégrateur 100 fournit la vitesse $\hat{\vec{v}}$ hybride.

Cette représentation simplifiée peut être complétée par la prise en compte de : i) la rotondité de la terre : on peut utiliser l'estimation de vitesse $\hat{\vec{v}}_{geo}$ pour calculer un terme correctif de vitesse angulaire, ce qui a pour effet de reboucler les 2 intégrateurs et de former un oscillateur dont la période propre est celle dite "de Schuller" (90 minutes environ); ii) le caractère sphérique du système de coordonnées géographiques où les méridiens convergent vers les pôles et induisent de ce fait un terme de rotation autour de son axe vertical du repère géographique lors de déplacements Est-Ouest; et iii) la rotation terrestre.

Du fait du traitement d'intégration des vitesses angulaires, le traitement de données réalisé par le module PFV n'est pas un processus linéaire. Par contre l'examen de la propagation des erreurs - sous réserve d'une amplitude limitée de celles affectant les angles d'Euler - montre que le modèle d'erreur (figure 14) est linéaire. Sur ce schéma, G et B sont les matrices définies dans le tableau ci avant.

Dans le module de calcul illustré figures 13 et 14 (PFV et son modèle d'erreur à 12 états) :

- 2 x 3 intégrateurs portent les estimés des biais des accéléromètres et des gyromètres (6 états) ;

- l'intégration du quaternion est un processus non linéaire à 3 états (les 3 angles de roulis, de tangage et de cap) ;

- les trois composantes de la vitesse constituent 3 autres états ;

- $\tilde{\vec{\theta}}$ est l'erreur angulaire de plateforme (trois petits angles) ;

- $\tilde{\vec{\theta}} \wedge \vec{\gamma}_{geo} = G\,\tilde{\vec{\theta}}$ est l'erreur de projection d'accélération.

La linéarité du modèle d'erreur illustré figure 14 se prête bien à la mise en oeuvre d'un filtre de Kalman dans lequel on hybride de manière optimale les données inertielles avec l'information de vitesse issue du traitement des données Lidar, comme illustré figure 13.

L'observation de vitesse $\vec{v}_{mt}$ issue du télémètre est en repère géographique. Les traitements d'image sont décrits dans le repère du télémètre. Le traitement des données télémètre permettant d'élaborer la mesure de vitesse brute incorpore donc une projection de la vitesse observée du repère télémètre vers le repère géographique ; cette opération est réalisée par un module 218 traitant les données délivrées en sortie par les modules 116 et 117. Si la matrice *M* est la matrice de passage du repère 1 vers le repère 2, un vecteur connu dans le repère 1 est projeté dans le repère 2 par: $\vec{x}_2 = M\vec{x}_1$, et la matrice de covariance de l'erreur par:

$$X_2 = M\,X_1\,M^T.$$

Bien que l'aide du télémètre ne permette d'observer qu'une partie du vecteur d'état $\vec{x}$, le principe du filtre de Kalman, basé sur un modèle de propagation des erreurs, permet d'identifier des erreurs sur toutes les composantes du vecteur d'état (sous réserve d'une certaine dynamique du porteur pour rendre observables les erreurs de cap et d'accélération horizontale). Ceci signifie que le filtre identifie non seulement les erreurs de vitesse, mais également les erreurs d'assiette et de cap, et les erreurs (ou biais) d'accélération et de vitesse angulaire.

Dans le mode de réalisation illustré figures 15 à 17, un senseur baro-altimétrique est prévu pour aider l'estimation de vitesse verticale ; un senseur de vitesse air permet d'estimer la vitesse du vent pendant les phases où le télémètre obtient des échos, puis de recalculer une vitesse sol à partir du dernier vent estimé lorsque le télémètre ne produit plus d'échos (pour cause de vol à haute altitude par exemple). Cette aide de vitesse air permet de limiter la divergence de l'erreur d'estimation de vitesse sol pendant les phases prolongées d'absence de mesure du TAB. Un magnétomètre permet d'aider l'estimation de cap.

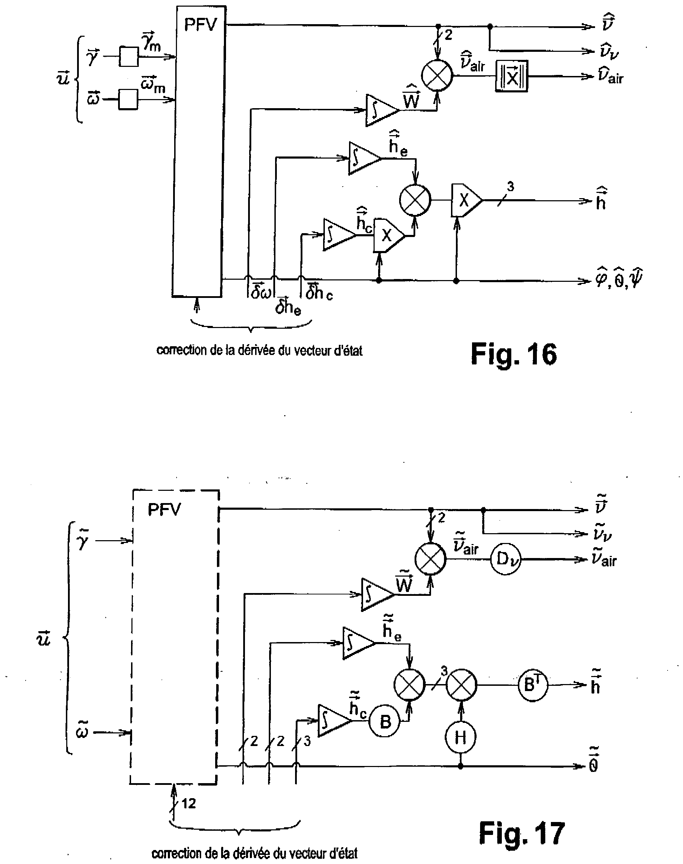

La plateforme virtuelle (figure 16) comporte 6 états (les trois angles d'Euler et les trois composantes du vecteur vitesse), les senseurs inertiels comportent 6 états markoviens (les trois biais d'accéléromètre et les trois biais de gyromètre) ; et les estimateurs de vent et des mesures magnétique et barométrique 7 états (voir figures 16 et 17) ; soit un vecteur d'état complet de dimension 19 :

- 2 intégrateurs portent les composantes Nord et Est du vent (la composante verticale est supposée nulle) ;

- 2 intégrateurs portent les composantes Nord et verticale de l'estimation $\vec{h}_c$ du champ magnétique terrestre en repère géographique (la composante Est-Ouest est nulle puisqu'on travaille par rapport au Nord magnétique) ;

- 3 intégrateurs portent l'estimation $\vec{h}_c$ du champ perturbateur généré par le porteur, en repère porteur ; ce champ est projeté en repère géographique ;

- la somme des 2 champs précédents est re-projetée en repère porteur, pour former une estimation du champ mesuré ;

- l'estimation de vitesse air $\hat{v}_{airm}$ est calculée en tant que module du vecteur vitesse air estimé : $\hat{v}_{airm} = \|\overline{\hat{v}}_{air}\|$ ;

- l'estimation de vitesse verticale est simplement la 3ème composante du vecteur $\hat{\vec{v}}$.

Le calcul de l'erreur sur le module se linéarise comme suit :

$$\left\|\hat{\vec{v}}_{air}\right\| = \sqrt{\hat{v}_{airN}^2 + \hat{v}_{airE}^2 + \hat{v}_{airD}^2}$$

$$\tilde{v}_{air}\underset{(\|\tilde{v}_{air}\|\,\text{petit})}{\approx}\left[\frac{\partial\|\vec{v}_{air}\|}{\partial v_{airN}}\quad\frac{\partial\|\vec{v}_{air}\|}{\partial v_{airE}}\quad\frac{\partial\|\vec{v}_{air}\|}{\partial v_{airD}}\right]\begin{bmatrix}\tilde{v}_{airN}\\\tilde{v}_{airE}\\\tilde{v}_{airD}\end{bmatrix} = D_v\,\tilde{\vec{v}}_{air}$$

avec :

$$D_v = \frac{\begin{bmatrix}v_{airN}&v_{airE}&v_{airD}\end{bmatrix}}{\|\vec{v}_{air}\|}$$

Et le calcul de l'erreur de projection du champ magnétique comme suit :

$$\tilde{\vec{\theta}}\wedge\vec{h}_{geo} = H\,\tilde{\vec{\theta}}$$

Le système d'hybridation illustré figure 18 est similaire à celui de la figure 11, et comporte en outre des moyens de détermination de la vitesse observée à partir d'un télémètre et d'un imageur plan (caméra).

L'observation de vitesse $\vec{v}_{mc}$ (mesurée par la caméra) issue de la combinaison des données de l'imageur 2D et des données télémètre doit, à l'entrée du filtre de Kalman, être elle aussi en repère géographique. Or, cette observation est éminemment en repère caméra, à telle enseigne qu'on ne dispose que de deux composantes dans ce repère. Pour passer dans le repère géographique, on peut compléter le vecteur par une troisième composante arbitrairement nulle, en associant à cette composante une variance d'erreur infinie. Le changement de repère du vecteur et de sa matrice de covariance est opéré par le module 218 de la même manière qu'indiqué ci avant.

Le schéma de la figure 18 correspond à l'hypothèse selon laquelle le bruit de mesure de l'accélération en repère géographique est blanc et centré. La plateforme virtuelle comporte donc 3 états (les trois composantes du vecteur vitesse). On dispose de deux observations de la vitesse, l'une issue du traitement des données télémètre et l'autre du traitement des images 2D associées aux données télémètre. La mesure est de dimension six (dont cinq sont significatives) et la matrice Z de DSP des erreurs affectant collectivement les 2 observations de vitesse est de dimension 6 x 6.

Comme dans le mode de réalisation de la figure 11, la matrice de covariance des erreurs de mesures inertielles a la forme suivante :

$$\begin{bmatrix} \Gamma_x & 0 & 0 \\ 0 & \Gamma_y & 0 \\ 0 & 0 & \Gamma_z \end{bmatrix}$$

Alors que dans le mode de réalisation correspondant à la figure 11, la matrice $V$ de covariance des erreurs de l'unique vitesse observée a la forme :

$$\begin{bmatrix} V_{nn_m} & V_{ne_m} & V_{nd_m} \\ V_{ne_m} & V_{ee_m} & V_{ed_m} \\ V_{nd_m} & V_{ed_m} & V_{dd_m} \end{bmatrix}$$

Dans le mode de réalisation correspondant à la figure 18, elle prend la forme :

$$Z = \begin{bmatrix} \begin{bmatrix} V_{nn_{mt}} & V_{ne_{mt}} & V_{nd_{mt}} \\ V_{ne_{mt}} & V_{ee_{mt}} & V_{ed_{mt}} \\ V_{nd_{mt}} & V_{ed_{mt}} & V_{dd_{mt}} \end{bmatrix} & 0 \\ 0 & \begin{bmatrix} V_{nn_{mc}} & V_{ne_{mc}} & V_{nd_{mc}} \\ V_{ne_{mc}} & V_{ee_{mc}} & V_{ed_{mc}} \\ V_{nd_{mc}} & V_{ed_{mc}} & V_{dd_{mc}} \end{bmatrix} \end{bmatrix}$$

On notera que les différentes aides utilisées dans ce dernier mode de réalisation sont indépendantes du GPS et que leur utilisation dans la fonction de détection d'obstacles respecte bien l'objectif de sécurité assigné aux dispositifs selon l'invention.

L'invention répond à l'exigence d'indépendance de fonctionnement de l'OWS et du GPS. Elle répond donc aux besoins d'un hélicoptère "Tout Temps" qui utilise le GPS comme moyen primaire de localisation, et l'OWS comme moyen de sécurisation du vol.

**Revendications**

1. Procédé de détermination d'au moins deux composantes de la vitesse estimée ($\hat{\vec{v}}$) d'un aéronef par rapport au sol (19), **caractérisé en ce que :**

   - on forme successivement au moins deux images ($z_1(x, y)$, $z_2(x, y)$) d'une même région du sol, les images comportant des données de distance séparant l'aéronef de points de la région du sol observée, et correspondant à des mesures délivrées par un télémètre,
   - on détermine une première vitesse brute ou observée en fonction de décalages ($\bar{d}$) entre ces images,
   - on combine par filtrage la vitesse brute ou observée à des mesures inertielles du mouvement de l'aéronef pour former la vitesse estimée ($\hat{\vec{v}}$).

2. Procédé selon la revendication 1, dans lequel les mesures inertielles comportent trois composantes d'accélération ($\vec{\gamma}_m$) et trois composantes de vitesse angulaire ($\vec{\omega}_m$) de l'aéronef.

3. Procédé selon la revendication 1 ou 2, dans lequel la mesure de vitesse brute ou observée est combinée par filtrage complémentaire aux mesures inertielles du mouvement de l'aéronef pour former la vitesse estimée ($\hat{\vec{v}}$), dite vitesse hybride.

4.  Procédé selon la revendication 3, dans lequel on détermine en outre une matrice (*V*) de covariance a priori de l'erreur affectant la mesure de vitesse brute ou observée, et dans lequel le filtrage est réalisé par un filtre (102, 202, 302, 402) complémentaire à gains (*K*) variables et dépendants de ladite matrice de covariance.

5.  Procédé selon la revendication 4, dans lequel le filtre complémentaire est un filtre de Kalman.

6.  Procédé selon l'une quelconque des revendications 1 à 5, dans lequel les mesures de distance sont issues d'un télémètre à balayage tel qu'un lidar, un radar, un sonar, ou un SAR ; ou bien d'un télémètre instantané ("snapshot").

7.  Procédé selon la revendication 6, dans lequel les mesures de distance sont obtenues par balayage de la région du sol.

8.  Procédé selon l'une quelconque des revendications 1 à 7, dans lequel les images comportent des données d'intensité lumineuse (*I*) de points de la région du sol observée qui sont délivrées par au moins une caméra, et dans lequel on détermine une seconde vitesse brute ou observée en fonction de décalages entre ces images.

9.  Procédé selon l'une quelconque des revendications 1 à 8, dans lequel les moyens de détermination de la vitesse brute ou observée ($\vec{v}_R$) à partir des images mettent en oeuvre une méthode différentielle.

10. Procédé selon l'une quelconque des revendications 1 à 8, dans lequel les moyens de détermination de la vitesse brute ou observée ($\vec{v}_R$) à partir des images mettent en oeuvre une méthode de corrélation, une méthode basée sur l'énergie, une méthode utilisant des modèles paramétrés, ou des méthodes mixtes de celles-ci.

11. Procédé selon l'une quelconque des revendications 1 à 10, dans lequel on combine en outre aux mesures inertielles, de distance et le cas échéant d'intensité lumineuse, des mesures de vitesse de l'aéronef dans (par rapport à) l'air.

12. Procédé selon l'une quelconque des revendications 1 à 11, dans lequel on combine en outre aux mesures inertielles, de distance et le cas échéant d'intensité lumineuse, des mesures de cap et/ou de champ magnétique.

13. Procédé selon l'une quelconque des revendications 1 à 12, dans lequel on combine en outre aux mesures inertielles, de distance et le cas échéant d'intensité lumineuse, des mesures d'altitude et/ou de pression barométrique.

14. Système (18) de détermination d'une vitesse estimée ($\hat{\vec{v}}$) d'un aéronef (25) comportant une unité (23) de mesure inertielle délivrant des signaux ou données de mesure du mouvement de l'aéronef, **caractérisé en ce qu'**il comporte en outre :

    - des moyens (11) pour former successivement au moins deux images ($z_1(x,y)$, $z_0(x,y)$) d'une même région du sol, les images comportant des données de distances séparant l'aéronef de points d'une région du sol (19) observée, et correspondant à des mesures délivrées par un télémètre,
    - des moyens (16, 116, 216, 316, 416) pour déterminer une donnée de vitesse ($\vec{v}_R$) observée ou brute en fonction de décalages ($\vec{d}$) entre les aux moins deux images,
    - des moyens (24) d'hybridation pour combiner les mesures inertielles et la vitesse ($\vec{v}_R$) observée et délivrer la vitesse estimée ($\hat{\vec{v}}$) ou hybride.

15. Système selon la revendication 14, dans lequel les moyens (16, 116, 216, 316, 416) de détermination d'une donnée de vitesse observée ou brute produisent un écart de vitesse $(\hat{\vec{v}} - \vec{v}_R)$, et dans lequel les moyens (24) d'hybridation comportent des moyens (13) de filtrage pour filtrer cet écart de vitesse et les mesures inertielles.

16. Système selon la revendication 15, dans lequel les moyens (13) de filtrage présentent un gain (*K*) variable en fonction des covariances (*V*) des erreurs entachant les mesures de distance d'une part, et des covariances (U) des erreurs entachant les mesures inertielles d'autre part.

**17.** Système selon l'une quelconque des revendications 14 à 16, dans lequel la vitesse observée est déterminée à partir d'un décalage ($\vec{d}$) entre deux séries successives de mesures de distance, et à partir de l'intervalle de temps ($\tau$) séparant ces deux séries d'observation d'une même région du sol.

**18.** Système selon l'une quelconque des revendications 14 à 17, dans lequel les moyens de mesure (11) comportent un capteur de télédétection à balayage tel qu'un radar, un lidar, un sonar ou un SAR; ou bien un télémètre instantané (dit "snapshot"), qui délivre une pluralité de mesures ou échos à trois dimensions de points du sol.

**19.** Système selon l'une quelconque des revendications 14 à 18, qui comporte en outre un capteur baro-altimétrique, un magnétomètre (92) et/ou un capteur (93) de vitesse air, ainsi que des moyens d'hybridation pour combiner les mesures délivrées par ces capteurs avec les mesures inertielles et de distance.

**20.** Système selon l'une quelconque des revendications 14 à 19, qui comporte en outre au moins un capteur d'observation passif tel qu'une caméra infrarouge, et des moyens de détermination d'une seconde vitesse observée à partir des images délivrées par ce capteur et des mesures de distances, afin de pallier les phases où l'on ne peut pas estimer de vitesse brute ou observée à partir des seules mesures de distance, comme par exemple pendant le survol d'un terrain plat.

**21.** Procédé de détection d'obstacles à bord d'un aéronef, en particulier à bord d'un aéronef à voilure tournante, comportant les opérations suivantes :

- l'extraction d'au moins une information de vitesse observée ou brute ($\vec{v}_R$) de l'aéronef à partir d'une séquence d'images ou d'ensembles d'échos d'une région ou relief survolé par l'aéronef, les images ou ensembles d'échos étant délivré(e)s par un capteur (11) d'observation installé à bord de l'aéronef, chaque image ou ensemble d'échos comportant des informations incluant des positions relatives tridimensionnelles d'une pluralité de points du relief survolé et de l'aéronef ;
- l'hybridation de la vitesse observée avec celle délivrée par un senseur inertiel embarqué pour former la vitesse estimée ($\hat{\vec{v}}$) à partir d'un procédé de détermination selon l'une quelconque des revendications 1 à 13 ; et
- la détection d'obstacles à partir des échos et de la vitesse estimée ($\hat{\vec{v}}$) obtenue par hybridation.

**22.** Système de détection d'obstacles pour un aéronef à voilure tournante qui comporte un système d'estimation d'au moins deux composantes de la vitesse de déplacement de l'aéronef qui est conforme à l'une quelconque des revendications 14 à 20, et/ou qui est programmé pour mettre en oeuvre un procédé selon l'une quelconque des revendications 1 à 15 ou 21.

**23.** Système selon la revendication 22 qui n'utilise pas et/ou est indépendant d'un système de positionnement par satellite.

**Patentansprüche**

**1.** Verfahren zum Bestimmen mindestens zweier Komponenten der geschätzten Geschwindigkeit ($\hat{\vec{v}}$) eines Luftfahrzeugs relativ zum Boden (19),
**dadurch gekennzeichnet, dass**:

- aufeinanderfolgend zwei Bilder ($z_1(x, y)$, $z_2(x, y)$) ein- und desselben Bereichs des Bodens aufgenommen werden, wobei die Bilder Daten des Abstandes aufweisen, der das Luftfahrzeug von Punkten des beobachteten Bodenbereichs aufweisen und von einem Entfernungsmesser gelieferten Messungen entsprechen,
- eine erste Brutto- oder beobachtete Geschwindigkeit in Abhängigkeit von Versetzungen ($\vec{d}$) zwischen diesen Bildern bestimmt wird,
- die Brutto- oder beobachtete Geschwindigkeit mit Trägheitsmessungen der Bewegung des Luftfahrzeugs durch Filtern kombiniert wird, um die geschätzte Geschwindigkeit ($\hat{\vec{v}}$) zu bilden.

**2.** Verfahren nach Anspruch 1, bei dem die Trägheitsmessungen drei Beschleunigungskomponenten ($\overline{\gamma_m}$) und drei Winkelgeschwindigkeitskomponenten ($\overline{\omega_m}$) des Luftfahrzeugs aufweisen.

**3.** Verfahren nach Anspruch 1 oder 2, bei dem die Brutto- oder beobachtete Geschwindigkeit durch eine zusätzliche Filterung mit Trägheitsmessungen der Bewegung des Luftfahrzeugs kombiniert wird, um die Hybridgeschwindigkeit genannte geschätzte Geschwindigkeit ($\hat{\bar{v}}$) zu bilden.

**4.** Verfahren nach Anspruch 3, bei dem ferner ä priori eine Kovarianzmatrix ($V$) des Fehlers bestimmt wird, der die Messung der Brutto- oder beobachteten Geschwindigkeit beeinträchtigt und bei dem das Filtern ausgeführt wird durch einen zusätzlichen Filter (102, 202, 302, 402) mit variablen Verstärkungsfaktoren ($K$) und in Abhängigkeit von der Kovarianzmatrix.

**5.** Verfahren nach Anspruch 4, bei dem der zusätzliche Filter ein Kalman-Filter ist.

**6.** Verfahren nach einem der Ansprüche 1 bis 5, bei dem die Abstandsmessungen durch einen Abtast-Entfernungsmesser erfolgen, wie einem Lidar, einem Radar, einem Sonar oder einem SAR (Radar mit synthetischer Aperatur); oder durch einen unverzögerten Entfernungsmesser ("Snapshot").

**7.** Verfahren nach Anspruch 6, bei dem die Abstandsmessungen durch Abtasten des Bereiches des Bodens erhalten werden.

**8.** Verfahren nach einem der Ansprüche 1 bis 7, bei dem die Bilder Lichtintensitätsdaten ($I$) von Punkten des beobachteten Bereichs des Bodens aufweisen, die von mindestens einer Kamera geliefert werden und bei dem eine zweite Brutto- oder beobachtete Geschwindigkeit in Abhängigkeit von den Versetzungen zwischen den Bildern bestimmt wird.

**9.** Verfahren nach einem der Ansprüche 1 bis 8, bei dem die Mittel zur Bestimmung der Brutto- oder beobachteten Geschwindigkeit ($\bar{v}_R$) ausgehend von den Bildern ein Differentialverfahren durchführen.

**10.** Verfahren nach einem der Ansprüche 1 bis 8, bei dem die Mittel zur Bestimmung der Brutto- oder beobachteten Geschwindigkeit ($\bar{v}_R$) ausgehend von den Bildern ein Korrelationsverfahren durchführen, ein Verfahren auf der Grundlage der Energie, ein Verfahren, welches parametrisierte Modelle verwendet, oder gemischte Verfahren aus diesen Verfahren.

**11.** Verfahren nach einem der Ansprüche 1 bis 10, bei dem ferner Trägheitsmessungen, Abstandsmessungen und gegebenenfalls Lichtintensitätsmessungen, Messungen der Geschwindigkeit des Luftfahrzeugs relativ zur Luft, kombiniert werden.

**12.** Verfahren nach einem der Ansprüche 1 bis 11, bei dem ferner Trägheitsmessungen, Abstandsmessungen und gegebenenfalls Lichtintensitätsmessungen mit Steuerkursmessungen und/oder Magnetfeldmessungen kombiniert werden.

**13.** Verfahren nach einem der Ansprüche 1 bis 12, bei dem ferner Trägheitsmessungen, Abstandsmessungen und gegebenenfalls Lichtintensitätsmessungen mit Höhenmessungen und/oder barometrischen Druckmessungen kombiniert werden.

**14.** System (18) zur Bestimmung einer geschätzten Geschwindigkeit ($\hat{\bar{v}}$) eines Luftfahrzeugs (25), welches eine Trägheitsmesseinheit (23) aufweist, die Signale oder Messdaten der Bewegung des Luftfahrzeugs liefert,
**dadurch gekennzeichnet, dass**
das System ferner aufweist:

- Mittel (11) zum aufeinanderfolgenden Bilden mindestens zweier Bilder ($z_1(x, y)$, $z_2(x, y)$) ein- und desselben Bereichs des Bodens, wobei die Bilder Daten aufweisen über Abstände, die das Luftfahrzeug von Punkten eines Bereichs des beobachteten Bodens (19) trennen, und die den Messwerten, welche von einem Entfernungsmesser geliefert werden, entsprechen,
- Mittel (16, 116, 216, 316, 416) zum Bestimmen eines Wertes ($\bar{v}_R$) der beobachteten oder Brutto-Geschwindigkeit in Abhängigkeit von der Versetzung ($\bar{d}$) zwischen mindestens zwei Bildern,
- Hybridisierungsmittel (24) zum Kombinieren der Trägheitsmesswerte und der beobachteten Geschwindigkeit ($\bar{v}_R$) und zum Liefern der geschätzten Geschwindigkeit ($\hat{\bar{v}}$) oder der Hybridgeschwindigkeit.

**15.** System nach Anspruch 14, bei dem die Mittel (16, 116, 216, 316, 416) zur Bestimmung eines Wertes der beobachteten Geschwindigkeit oder der Brutto-Geschwindigkeit einen Geschwindigkeitsunterschied $(\hat{\bar{v}} - \bar{v}_R)$ erzeugen und bei dem die Hybridisierungsmittel (24) Filter (13) aufweisen zum Filtern dieses Geschwindigkeitsunterschieds und der Trägheitsmessungen.

**16.** System nach Anspruch 15, bei dem die Filter (13) einen Verstärkungsfaktor ($K$) aufweisen, der in Abhängigkeit von Kovarianzen ($V$) von Fehlern, die einerseits die Abstandsmessungen beeinträchtigen und andererseits von Kovarianzen ($U$) von Fehlern, die die Trägheitsmessungen beeinträchtigen, variabel ist.

**17.** System nach einem der Ansprüche 14 bis 16, bei dem die beobachtete Geschwindigkeit bestimmt wird ausgehend von einer Versetzung ($\bar{d}$) zwischen zwei aufeinanderfolgenden Reihen von Abstandsmessungen und ausgehend von dem Zeitintervall ($\tau$), das die beiden Beobachtungsreihen ein- und desselben Bereichs des Bodens trennt.

**18.** System nach einem der Ansprüche 14 bis 17, bei dem die Messmittel (11) einen Abtast-Fernerkundungssensor aufweisen, wie einen Radar, einen Lidar, einen Sonar oder einen SAR (Radar mit synthetischer Apertur) oder einen Entfernungsmesser ohne Zeitverzögerung (genannt "Snapshot"), der eine Mehrzahl von Messwerten oder Echos in drei Dimensionen von Punkten auf dem Boden liefert.

**19.** System nach einem der Ansprüche 14 bis 18, welches ferner einen barometrischen Höhenmesser, ein Magnetometer (92) und/oder einen Sensor (93) zur Messung der Geschwindigkeit gegenüber der Luft, sowie Hybridisierungsmittel aufweist zum Kombinieren der von den Sensoren gelieferten Messwerte mit den Trägheitsmessungen und den Abstandsmessungen.

**20.** System nach einem der Ansprüche 14 bis 19, welches ferner mindestens einen Sensor zur passiven Beobachtung aufweist, wie eine Infrarotkamera, und Mittel zur Bestimmung einer zweiten beobachteten Geschwindigkeit ausgehend von Bildern, die von diesem Sensor geliefert werden und von Abstandsmessungen, um Phasen auszugleichen, in denen die Brutto- oder beobachtete Geschwindigkeit ausgehend von einzigen Abstandsmessungen, wie beispielsweise während des Überfliegens eines ebenen Geländes, nicht abgeschätzt werden kann.

**21.** Verfahren zur Bestimmung von Hindernissen an Bord eines Luftfahrzeugs, insbesondere an Bord eines Drehflügelflugzeugs, mit den folgenden Schritten:

- Extraktion mindestens einer Information über die beobachtete Geschwindigkeit oder Brutto-Geschwindigkeit ($\bar{v}_R$) des Luftfahrzeugs ausgehend von einer Abfolge von Bildern oder Gesamtheiten von Echos eines Gebiets oder eines von dem Luftfahrzeug überflogenen Reliefs, wobei die Bilder oder Gesamtheiten von Echos von einem Beobachtungssensor (11) geliefert werden, der an Bord des Luftfahrzeugs installiert ist, wobei jedes Bild oder jede Gesamtheit von Echos Informationen umfasst, die die dreidimensionalen Relativpositionen einer Mehrzahl von Punkten des überflogenen Reliefs und des Luftfahrzeugs umfassen,
- die Hybridisierung der beobachteten Geschwindigkeit mit der Geschwindigkeit, die von einem eingebauten Trägheitssensor geliefert wird, zum Bilden der geschätzten Geschwindigkeit ($\hat{\bar{v}}$) ausgehend von einem Bestimmungsverfahren nach einem der Ansprüche 1 bis 13, und
- die Erfassung von Hindernissen ausgehend von Echos und der geschätzten Geschwindigkeit ($\hat{\bar{v}}$), die durch die Hybridisierung erhalten wurde.

**22.** System zur Erfassung von Hindernissen für ein Drehflügelflugzeug, welches ein System zum Abschätzen mindestens zweier Komponenten der Fluggeschwindigkeit des Luftfahrzeugs aufweist, gemäß einem der Ansprüche 14 bis 20, und/oder welches programmiert ist, um ein Verfahren nach einem der Ansprüche 1 bis 15 oder 21 auszuführen.

**23.** System nach Anspruch 22, welches kein satellitengesteuertes Positionierungssystem verwendet und/oder welches unabhängig von einem satellitengesteuerten Positionierungssystem ist.

**Claims**

**1.** Method of determining at least two components of the estimated speed ($\hat{\bar{v}}$) of an aircraft relative to the ground (19), **characterized in that**:

- at least two images ($z_1(x,y)$, $z_2(x,y)$) of a same region of the ground are formed successively, the images comprising data of distance separating the aircraft from points of the observed region of the ground, and corresponding to measurements delivered by a range finder,
- a first gross or observed speed is determined as a function of offsets ($\bar{d}$) between said images,
- the gross or observed speed is combined by filtering with inertial measurements of the movement of the aircraft in order to form the estimated speed ($\hat{\vec{v}}$).

2. Method according to claim 1, in which the inertial measurements comprise three acceleration components ($\vec{\gamma_m}$) and three angular speed components ($\vec{\omega_m}$) of the aircraft.

3. Method according to claim 1 or 2, in which the gross or observed speed measurement is combined by complementary filtering with the inertial measurements of the movement of the aircraft in order to form the estimated speed ($\hat{\vec{v}}$), referred to as the hybrid speed.

4. Method according to claim 3, in which an a priori covariance matrix ($V$) is also determined for the error affecting the gross or observed speed measurement, and in which the filtering is performed by a complementary filter (102, 202, 302, 402) having gains ($K$) variable and dependent on said covariance matrix.

5. Method according to claim 4, in which the complementary filter is a Kalman filter.

6. Method according to any one of claims 1 to 5, in which the distance measurements come from a scanning range finder such as a lidar, a radar, a sonar, or an SAR; or else from a "snapshot" range finder.

7. Method according to claim 6, in which the distance measurements are obtained by scanning the region of the ground.

8. Method according to any one of claims 1 to 7, in which the images comprise light intensity data ($I$) of points of the observed region of the ground which are delivered by at least one camera, and in which a second gross or observed speed is determined as a function of offsets between said images.

9. Method according to any one of claims 1 to 8, in which the means for determining the gross or observed speed ($\vec{v_R}$) from the images implement a differential method.

10. Method according to any one of claims 1 to 8, in which the means for determining the gross or observed speed ($\vec{v_R}$) from the images implement a correlation method, a method based on energy, a method using parameterized models, or a combination of said methods.

11. Method according to any one of claims 1 to 10, in which measurements of the airspeed of the aircraft in (relative to) the air are combined with the inertial, distance, and where appropriate light intensity measurements.

12. Method according to any one of claims 1 to 11, in which heading and/or magnetic field measurements are combined with the inertial, distance, and where appropriate light intensity measurements.

13. Method according to any one of claims 1 to 12, in which altitude and/or barometric pressure measurements are combined with the inertial, distance, and where appropriate light intensity measurements.

14. System (18) for determining an estimated speed ($\hat{\vec{v}}$) of an aircraft (25) comprising an inertial measurement unit (23) delivering signals or data of measurement of the movement of the aircraft, **characterized in that** it further comprises:

- means (11) for forming successively at least two images ($z_1(x, v)$, $z_0(x, v)$) of a same region of the ground, the images comprising data of distances separating the aircraft from points of an observed region of the ground (19), and corresponding to measurements delivered by a range finder,
- means (16, 116, 216, 316, 416) for determining observed or gross speed measurement ($\vec{v_R}$) as a function of offsets ($\bar{d}$) between the at least two images,

- hybridization means (24) for combining the inertial measurements and the observed speed ($\vec{v}_R$) and delivering the estimated or hybrid speed ($\hat{\vec{v}}$).

**15.** System according to claim 14, in which the means (16, 116, 216, 316, 416) for determining an observed or gross speed measurement produce a speed difference $(\hat{\vec{v}} - \vec{v}_R)$, and in which the hybridization means (24) comprise filter means (13) for filtering said speed difference and the inertial measurements.

**16.** System according to claim 15, in which the filter means (13) present a gain ($K$) variable as a function of the covariances ($V$) of the errors affecting the distance measurements, on the one hand, and covariances ($U$) of the errors affecting the inertial measurements, on the other hand.

**17.** System according to any one of claims 14 to 16, in which the observed speed is determined from an offset ($\bar{d}$) between two successive series of distance measurements, and from the time interval ($\tau$) separating said two series of observations of a same region of the ground.

**18.** System according to any one of claims 14 to 17, in which the measurement means (11) comprise a scanning remote detection sensor such as a radar, a lidar, a sonar or an SAR; or else a "snapshot" range finder, which delivers a plurality of measurements or echoes in three dimensions from points on the ground.

**19.** System according to any one of claims 14 to 18, which further comprises a barometric altimeter sensor, a magnetometer (92) and/or an airspeed sensor (93), together with hybridization means for combining the measurements delivered by said sensors with the inertial and distance measurements.

**20.** System according to any one of claims 14 to 19, which further comprises at least one passive observation sensor such as an infrared camera, and means for determining a second observed speed from the images delivered by said sensor and from distance measurements, in order to mitigate the phases in which it is not possible to estimate gross or observed speed from distance measurements only, as for example when overflying flat terrain.

**21.** Method of detecting obstacles on board an aircraft, in particular on board a rotary wing aircraft, comprising the following operations:

- extracting at least one item of information about observed or gross speed ($\vec{v}_R$) of the of the aircraft from a sequence of images or sets of echoes of a region or relief overflown by the aircraft, the images or sets of echoes being delivered by an observation sensor (11) installed on board the aircraft, each image or set of echoes comprising information including relative three-dimensional positions of a plurality of points of the relief overflown and of the aircraft;
- hybridizing the observed speed with that speed delivered by an on-board inertial sensor to form the estimated speed ($\hat{\vec{v}}$) from a method of determining according to any one of claims 1 to 13; and
- detecting obstacles from the echoes and from the estimated speed ($\hat{\vec{v}}$) obtained by hybridizing.

**22.** System of detecting obstacles for a rotary wing aircraft which comprises a system for estimating at least two components of the travel speed of the aircraft which is in accordance with any one of claims 14 to 20, and/or which is programmed to implement a method according to any one of claims 1 to 15 or 21.

**23.** System according to claim 22 which does not make use of and/or is independent of a satellite positioning system.

**Fig. 1**

**Fig. 2**

**Fig. 3**

Fig. 4

Fig. 5

Fig. 6

Fig. 7

Fig. 8

Fig. 9

**Fig. 10**

instant t

instant t+1

25

Mesures d'altitudes identiques

**Fig. 11**

101

102 100

$\vec{\gamma}_m \rightarrow$ X $\vec{\gamma}_{geo}$ $\widehat{\vec{v}}$

3

3x3

vitesse estimée

matrice de covariance de l'erreur affectant la vitesse estimée

117

calcul cov.

$\varphi_m \, \Theta_m \, \Psi_m$
(de l'AHRS
ou de l'IRS)

mémoire
de plots

$z^{-1}$

ident.
décalage

T
G

218

112

114

116

102

k

k

3x3

écart des erreurs de vitesse

$\Delta \vec{v}$

3

3x3

U

calcul du
gain optimal

3x3

V

3x3

24

13

Fig. 12

**Fig. 13**

correction de la dérivée du vecteur d'état

**Fig. 14**

correction de la dérivée du vecteur d'état

Fig. 15

Fig. 16

Fig. 17

Fig. 18

$$\frac{X}{\sqrt{X^2+f^2}} = -\frac{x_t}{z_t}$$

**Fig. 19**

**EP 1 724 592 B1**

## RÉFÉRENCES CITÉES DANS LA DESCRIPTION

**Documents brevets cités dans la description**

- US 2004267444 A
- US 5166688 A
- US 3702477 A
- US 5128874 A
- FR 2712251
- US 5555175 A